(19) **Europäisches Patentamt / European Patent Office / Office européen des brevets**

(11) **EP 4 668 601 A1**

(12) **EUROPEAN PATENT APPLICATION**
published in accordance with Art. 153(4) EPC

(43) Date of publication:
**24.12.2025 Bulletin 2025/52**

(21) Application number: **24755961.0**

(22) Date of filing: **30.01.2024**

(51) International Patent Classification (IPC):
**H04B 7/06** (2006.01)

(52) Cooperative Patent Classification (CPC):
**H04B 7/06; H04B 7/08**

(86) International application number:
**PCT/CN2024/074638**

(87) International publication number:
**WO 2024/169587 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.02.2023 CN 202310175990**

(71) Applicant: **Huawei Technologies Co., Ltd.**
**Shenzhen, Guangdong 518129 (CN)**

(72) Inventors:
- **QI, Hong**
  **Shenzhen, Guangdong 518129 (CN)**
- **ZHANG, Yi**
  **Shenzhen, Guangdong 518129 (CN)**
- **YI, Feng**
  **Shenzhen, Guangdong 518129 (CN)**
- **SU, Hongjia**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **BEAM TRAINING METHOD AND APPARATUS, SYSTEM, AND STORAGE MEDIUM**

(57)   This application discloses a beam training method and apparatus, a system, and a storage medium. A first terminal sends a first RS to a second terminal on a first beam, and receives first indication information sent by the second terminal on a PSFCH or a PSSCH, where the first indication information indicates a beam measurement result. Alternatively, a first terminal sends first RSs to a second terminal on M beams corresponding to M resources, where SCI carried on a PSCCH is used to reserve N beam feedback resources. The second terminal measures N first RSs to obtain N pieces of beam feedback information, and sends at least one piece of beam feedback information to the first terminal on at least one of the N beam feedback resources. The first RS is a demodulation RS of the PSSCH or the PSCCH. In this application, beam training is performed by multiplexing a demodulation reference signal of a PSSCH or a PSCCH, so that beam training can be implemented, and signaling overheads are reduced.

FIG. 13

**Description**

This application claims priority to Chinese Patent Application No. 202310175990.1, filed with the China National Intellectual Property Administration on February 17, 2023 and entitled "BEAM TRAINING METHOD AND APPARATUS, SYSTEM, AND STORAGE MEDIUM", which is incorporated herein by reference in its entirety.

**TECHNICAL FIELD**

This application relates to the field of communication technologies, and in particular, to a beam training method and apparatus, a system, and a storage medium.

**BACKGROUND**

Beam management is an important technology proposed for a frequency range (frequency range, FR2) in 5th generation (5th generation, 5G) new radio (new radio, NR). Beam management includes beam training.

In an existing NR sidelink (sidelink, SL) system, a transmitter and a receiver can complete a basic synchronization process based on a sidelink-synchronization signal block (sidelink-synchronization signal block, S-SSB). However, the S-SSB is configured outside a resource pool, and S-SSBs used by all SL terminals are consistent. In this case, different SL terminals may send synchronization sequences at a same S-SSB position. For a terminal that performs sidelink transmission, due to a hardware limitation, the terminal is usually a half-duplex apparatus. If the S-SSB is used for beam training, a severe half-duplex problem may occur.

In view of this, how to perform sidelink beam training is an urgent problem to be resolved.

**SUMMARY**

This application provides a beam training method and apparatus, a system, and a storage medium, to implement sidelink beam training and reduce signaling overheads.

According to a first aspect, a beam training method is provided. The method includes: A first terminal sends a first reference signal to a second terminal on a first beam, where the first reference signal is a demodulation reference signal of a first physical sidelink shared channel (physical sidelink shared channel, PSSCH) or a first physical sidelink control channel (physical sidelink control channel, PSCCH), or the first reference signal is a sidelink channel state reference signal; and the first terminal receives first indication information from the second terminal on a first physical sidelink feedback channel (physical sidelink feedback channel, PSFCH) or a second PSSCH, where the first indication information indicates a beam measurement result of the first reference signal.

In this aspect, beam training is performed by multiplexing a demodulation reference signal of a PSSCH or a PSCCH, so that beam training can be implemented, and signaling overheads are reduced. In addition, a PSFCH of the PSSCH may be multiplexed or the second PSSCH may be used to feed back the beam measurement result of the first reference signal, thereby avoiding introducing an additional feedback resource and simplifying a communication design.

In a possible implementation, that the first terminal sends the first reference signal to the second terminal on the first beam includes: The first terminal sends the first reference signal to the second terminal on only the first beam between two adjacent PSFCHs.

In this implementation, the first terminal does not need to receive beam measurement results by using beams in two different directions on a same PSFCH, thereby improving communication reliability.

In another possible implementation, a resource used for the second PSSCH is a resource reserved by the first PSCCH.

In another possible implementation, the first indication information is carried in a medium access control-control element (medium access control-control element, MAC CE).

In another possible implementation, the first terminal receives, on a PSSCH, the first indication information sent by the first terminal.

In another possible implementation, the first indication information may be carried on a PSCCH carried on a resource used for the second PSSCH. Specifically, the first indication information may be in first-stage SCI or second-stage SCI.

In another possible implementation, there is a unique correspondence between a resource used in a sending direction of the first beam and a time domain position of the first PSFCH.

In another possible implementation, the first reference signal is in one-to-one correspondence with the first PSFCH.

In another possible implementation, the PSSCH is used to carry a direct communication request message, and the first reference signal and the direct communication request message are in a same time unit.

In another possible implementation, the method further includes: The first terminal sends sidelink control information on the first beam, where the sidelink control information indicates that the PSSCH is used to carry the direct communication request message.

In another possible implementation, the sidelink control information further includes a first bitmap, and the first bitmap indicates a frequency domain position of at least one first resource that carries at least one piece of first indication information.

In this implementation, the PSFCH of the PSSCH may be multiplexed to feed back the beam measurement result of the first reference signal, thereby avoiding introducing an additional feedback resource, and simplifying a communication design.

In another possible implementation, the at least one first resource and at least one second resource do not overlap, and the at least one second resource is used to carry feedback information of a physical sidelink shared channel and/or feedback information of inter-user equipment coordination.

In another possible implementation, the sidelink control information further includes second indication information, the second indication information indicates a time window, and the method further includes: The first terminal receives direct communication accept information from the second terminal in the time window in a direction of a second beam.

In this implementation, the time window is indicated by using the SCI, so that the second terminal sends the direct communication accept message in the time window, and the first terminal may wait for receiving the direct communication accept message on the second beam. After the time window expires, as a communication environment changes, the first terminal may switch to another beam for communication. This improves communication reliability.

In another possible implementation, there is a unique correspondence between the second terminal and a frequency domain resource position in which a feedback resource is located.

In another possible implementation, the method further includes: The first terminal determines, by performing a modulo operation on a part of bandwidth by using an identifier of the second terminal, a frequency domain resource position in which the first PSFCH is located.

In another possible implementation, the beam measurement result of the first reference signal includes quantization information for interval quantization on reference signal received power RSRP; the quantization information is indicated by using a sequence corresponding to a cyclic shift code of the first PSFCH; and a quantization interval to which the RSRP belongs is in one-to-one correspondence with the cyclic shift code of the first PSFCH.

In this implementation, the PSFCH of the PSSCH may be multiplexed to feed back the beam measurement result of the first reference signal, thereby avoiding introducing an additional feedback resource, and simplifying a communication design.

In another possible implementation, the method further includes: The first terminal determines a second beam based on at least one piece of first indication information, where the second beam is a beam corresponding to a largest beam measurement result in beam measurement results corresponding to a plurality of beams; or the second beam is any beam in a candidate beam set, and a beam measurement result corresponding to a candidate beam in the candidate beam set is greater than or equal to a specified threshold.

According to a second aspect, a beam training method is provided. The method includes: A second terminal receives a first reference signal from a first terminal on a first beam, where the first reference signal is a demodulation reference signal of a first PSSCH or a first PSCCH, or the first reference signal is a sidelink channel state reference signal; the second terminal measures the first reference signal, to obtain a beam measurement result of the first reference signal; and the second terminal sends first indication information to the first terminal on a first PSFCH or a second PSSCH, where the first indication information indicates the beam measurement result of the first reference signal.

In this aspect, beam training is performed by multiplexing a demodulation reference signal of a PSSCH or a PSCCH, so that beam training can be implemented, and signaling overheads are reduced. In addition, a PSFCH of the PSSCH may be multiplexed or the second PSSCH may be used to feed back the beam measurement result of the first reference signal, thereby avoiding introducing an additional feedback resource and simplifying a communication design.

In a possible implementation, that the second terminal receives the first reference signal from the first terminal on the first beam includes: The second terminal receives the first reference signal from the first terminal on only the first beam between two adjacent PSFCHs.

In another possible implementation, a resource used for the second PSSCH is a resource reserved by the first PSCCH.

In another possible implementation, the first indication information is carried in a MAC CE.

In another possible implementation, the second terminal sends the first indication information to the first terminal on a PSSCH.

In another possible implementation, the first indication information is carried on a PSCCH, and the PSCCH is located on a time-frequency resource used for the second PSSCH.

In another possible implementation, there is a unique correspondence between a resource used in a sending direction of the first beam and a time domain position of the first PSFCH.

In another possible implementation, the first reference signal is in one-to-one correspondence with the first PSFCH.

In another possible implementation, the PSSCH is used to carry a direct communication request message, and the first reference signal and the direct communication request message are in a same time unit.

In another possible implementation, the method further includes: The second terminal receives sidelink control information on the first beam, where the sidelink control information indicates that the PSSCH is used to carry the direct communication request message.

In another possible implementation, the sidelink control information further includes a first bitmap, and the first bitmap indicates a frequency domain position of at least one first resource that carries at least one piece of first indication information.

In another possible implementation, the at least one first resource and at least one second resource do not overlap, and the at least one second resource is used to carry feedback information of a physical sidelink shared channel and/or feedback information of inter-user equipment coordination.

In another possible implementation, the sidelink control information further includes second indication information, the second indication information indicates a time window, and the method further includes: The second terminal sends direct communication receive information to the first terminal in the time window in a direction of a second beam.

In another possible implementation, there is a unique correspondence between the second terminal and a frequency domain resource position in which a feedback resource is located.

In another possible implementation, the method further includes: The second terminal determines a frequency domain position of a corresponding feedback resource by performing a modulo operation on a part of bandwidth by using an identifier of the second terminal.

In another possible implementation, the beam measurement result of the first reference signal includes quantization information for interval quantization on reference signal received power RSRP; the quantization information is indicated by using a sequence corresponding to a cyclic shift code of the first PSFCH; and a quantization interval to which the RSRP belongs is in one-to-one correspondence with the cyclic shift code of the first PSFCH.

In another possible implementation, there are a plurality of quantization intervals, each quantization interval corresponds to a range of one RSRP value, and the method further includes: The second terminal determines, based on an RSRP value corresponding to the first reference signal, that the RSRP value corresponding to the first reference signal corresponds to a first quantization interval; and determines, based on the first quantization interval, a cyclic shift code of the first PSFCH corresponding to the first quantization interval.

According to a third aspect, a beam training method is provided. The method includes: A first terminal sends first reference signals to a second terminal on M beams corresponding to M resources, where the first reference signal is a demodulation reference signal of a PSSCH or a PSCCH, the PSCCH is used to carry sidelink control information, the sidelink control information is used to reserve N beam feedback resources, the N beam feedback resources are used to feed back beam measurement results of the M beams, the N beam feedback resources do not overlap in time domain, and both M and N are positive integers; and the first terminal respectively receives at least one of M pieces of beam feedback information from the second terminal on at least one of the N beam feedback resources, where the at least one piece of beam feedback information indicates a beam measurement result of at least one first reference signal.

In this aspect, beam training is performed by multiplexing a demodulation reference signal of a PSSCH or a PSCCH, so that beam training can be implemented, and signaling overheads are reduced. In addition, the N beam feedback resources are reserved, so that after the first terminal sweeps all beams, the second terminal can perform centralized feedback on at least one beam feedback resource. This accelerates a beam training process and simplifies a communication design, and the first terminal waits for receiving beam feedback information in a corresponding beam direction, so that blind reception of the first terminal can be avoided.

In a possible implementation, the PSSCH is used to carry a direct communication request message.

In another possible implementation, the sidelink control information further includes first indication information, and the first indication information indicates that the PSSCH carries the direct communication request message.

In another possible implementation, the sidelink control information further includes second indication information, the second indication information indicates a time window, and the method further includes: The first terminal receives direct communication receive information from the second terminal in the time window in a direction of a second beam.

In another possible implementation, the second beam is a beam corresponding to a largest beam measurement result in beam measurement results corresponding to a plurality of beams; or the second beam is any beam in a candidate beam set, and a beam measurement result corresponding to a candidate beam in the candidate beam set is greater than or equal to a specified threshold.

In another possible implementation, in a resource pool, the sidelink control information further indicates that priorities of the N reserved beam feedback resources are the highest.

In another possible implementation, the sidelink control information further includes third indication information, and the third indication information indicates time domain positions of the N beam feedback resources.

In another possible implementation, the time domain position of the beam feedback resource includes an absolute symbol position or a slot position, or the time domain position of the beam feedback resource includes a slot position and a relative symbol position in a slot.

In another possible implementation, at least two slots in which the N beam feedback resources are located are consecutive in time domain.

In another possible implementation, a difference between a slot in which a first beam feedback resource in the N beam feedback resources is located and a slot in which an N$^{th}$ beam feedback resource in the N beam feedback resources is located is within a first threshold range.

In another possible implementation, the N beam feedback resources correspond to $\lceil M/X \rceil$ slots, $\lceil \rceil$ represents rounding up, and X beam feedback resources corresponding to X beam directions are located in a same slot.

In this implementation, signaling overheads of resource reservation can be reduced.

In another possible implementation, $N = \lceil M/X \rceil$.

In this implementation, signaling overheads of resource reservation can be reduced.

In another possible implementation, M is equal to N.

In another possible implementation, the method further includes: The first terminal device determines, based on an identifier of the second terminal, a frequency domain resource position in which a feedback resource is located.

In this implementation, to avoid a conflict, there may be a unique correspondence between the second terminal and a frequency domain resource in a feedback position.

In another possible implementation, that the first terminal device determines, based on the identifier of the second terminal, the frequency domain resource position in which the feedback resource is located includes: The first terminal determines the frequency domain position of the corresponding feedback resource by performing a modulo operation on a part of bandwidth by using the identifier of the second terminal.

According to a fourth aspect, a beam training method is provided. The method includes: A second terminal receives first reference signals from a first terminal on M beams corresponding to M resources, where the first reference signal is a demodulation reference signal of a PSSCH or a PSCCH, the PSCCH is used to carry sidelink control information, the sidelink control information is used to reserve N beam feedback resources, the N beam feedback resources are used to feed back beam measurement results of the M beams, the N beam feedback resources do not overlap in time domain, and both M and N are positive integers; the second terminal measures the M first reference signals to obtain M pieces of beam feedback information; and the second terminal sends at least one of the M pieces of beam feedback information to the first terminal on at least one of the N beam feedback resources.

In this aspect, beam training is performed by multiplexing a demodulation reference signal of a PSSCH or a PSCCH, so that beam training can be implemented, and signaling overheads are reduced. In addition, the N beam feedback resources are reserved, so that after the first terminal sweeps all beams, the second terminal can perform centralized feedback on at least one beam feedback resource. This accelerates a beam training process and simplifies a communication design, and the first terminal waits for receiving beam feedback information in a corresponding beam direction, so that blind reception of the first terminal can be avoided.

In a possible implementation, the PSSCH is used to carry a direct communication request message.

In another possible implementation, the sidelink control information further includes first indication information, and the first indication information indicates that the PSSCH carries the direct communication request message.

In another possible implementation, the sidelink control information further includes second indication information, the second indication information indicates a time window, and the method further includes: The second terminal sends direct communication receive information to the first terminal in the time window in a direction of a second beam.

In another possible implementation, the second beam is a beam corresponding to a largest beam measurement result in beam measurement results corresponding to a plurality of beams; or the second beam is any beam in a candidate beam set, and a beam measurement result corresponding to a candidate beam in the candidate beam set is greater than or equal to a specified threshold.

In another possible implementation, in a resource pool, the sidelink control information further indicates that priorities of the N reserved beam feedback resources are the highest.

In another possible implementation, the sidelink control information further includes third indication information, and the third indication information indicates time domain positions of the N beam feedback resources.

In another possible implementation, the time domain position of the beam feedback resource includes an absolute symbol position or a slot position, or the time domain position of the beam feedback resource includes a slot position and a relative symbol position in a slot.

In another possible implementation, at least two slots in which the N beam feedback resources are located are consecutive in time domain.

In another possible implementation, a difference between a slot in which a first beam feedback resource in the N beam feedback resources is located and a slot in which an N$^{th}$ beam feedback resource in the N beam feedback resources is located is within a first threshold range.

In another possible implementation, the N beam feedback resources correspond to $\lceil M/X \rceil$ slots, and X beam feedback resources corresponding to X beam directions are located in a same slot.

In another possible implementation, $N=\lceil M/X \rceil$.

In another possible implementation, M is equal to N.

In another possible implementation, the method further includes: The second terminal device determines, based on an identifier of the second terminal, a frequency domain resource position in which a feedback resource is located.

In another possible implementation, that the second terminal device determines, based on the identifier of the second terminal, the frequency domain resource position in which the feedback resource is located includes: The second terminal determines the frequency domain position of the corresponding feedback resource by performing a modulo operation on a part of bandwidth by using the identifier of the second terminal.

According to a fifth aspect, a communication method is provided. The method includes: A first terminal sends second information to a second terminal in a first time unit by using a third beam, where the second information indicates that the first terminal is to send third information in a second time unit by using a fourth beam; and the first terminal sends the third information to the second terminal in the second time unit by using the fourth beam.

In a possible implementation, the third information is carried on a PSCCH. Specifically, the third information may be first-stage SCI or second-stage SCI.

According to a sixth aspect, a communication method is provided. The method includes: A second terminal receives second information from a first terminal in a first time unit by using a third beam, where the second information indicates that the first terminal is to send third information in a second time unit by using a fourth beam; the second terminal determines, based on the second information, a receive beam direction for receiving, in the second time unit, information sent by the first terminal; and the second terminal receives the third information from the first terminal in the second time unit by using the fourth beam.

According to a seventh aspect, a beam training apparatus is provided. The beam training apparatus may implement the method in the first aspect. For example, the beam training apparatus may be a first terminal or a chip in the first terminal. The foregoing method may be implemented by software, hardware, or hardware executing corresponding software.

In a possible implementation, the apparatus includes a communication unit and a processing unit. The communication unit is configured to send a first reference signal to a second terminal on a first beam, where the first reference signal is a demodulation reference signal of a first PSSCH or a first PSCCH, or the first reference signal is a sidelink channel state reference signal; and the communication unit is further configured to receive first indication information from the second terminal on a first PSFCH or a second PSSCH, where the first indication information indicates a beam measurement result of the first reference signal.

Optionally, the communication unit is configured to send the first reference signal to the second terminal on only the first beam between two adjacent PSFCHs.

Optionally, a resource used for the second PSSCH is a resource reserved by the first PSCCH.

Optionally, the first indication information is carried in a MAC CE.

Optionally, there is a unique correspondence between a resource used in a sending direction of the first beam and a time domain position of the first PSFCH.

Optionally, the first reference signal is in one-to-one correspondence with the first PSFCH.

Optionally, the PSSCH is used to carry a direct communication request message, and the first reference signal and the direct communication request message are in a same time unit.

Optionally, the communication unit is further configured to send sidelink control information on the first beam, where the sidelink control information indicates that the PSSCH is used to carry the direct communication request message.

Optionally, the sidelink control information further includes a first bitmap, and the first bitmap indicates a frequency domain position of at least one first resource that carries at least one piece of first indication information.

Optionally, the at least one first resource and at least one second resource do not overlap, and the at least one second resource is used to carry feedback information of a physical sidelink shared channel and/or feedback information of inter-user equipment coordination.

Optionally, the sidelink control information further includes second indication information, the second indication information indicates a time window, and the method further includes: The first terminal receives direct communication accept information from the second terminal in the time window in a direction of a second beam.

Optionally, there is a unique correspondence between the second terminal and a frequency domain resource position in which a feedback resource is located.

Optionally, the processing unit is configured to determine, by performing a modulo operation on a part of bandwidth by using an identifier of the second terminal, a frequency domain resource position in which the first PSFCH is located.

Optionally, the beam measurement result of the first reference signal includes quantization information for interval quantization on reference signal received power RSRP; the quantization information is indicated by using a sequence corresponding to a cyclic shift code of the first PSFCH; and a quantization interval to which the RSRP belongs is in one-to-one correspondence with the cyclic shift code of the first PSFCH.

Optionally, the processing unit is further configured to determine a second beam based on at least one piece of first indication information, where the second beam is a beam corresponding to a largest beam measurement result in beam measurement results corresponding to a plurality of beams; or the second beam is any beam in a candidate beam set, and a beam measurement result corresponding to a candidate beam in the candidate beam set is greater than or equal to a specified threshold.

According to an eighth aspect, a beam training apparatus is provided. The beam training apparatus may implement the method in the second aspect. For example, the beam training apparatus may be a second terminal or a chip in the second terminal. The foregoing method may be implemented by software, hardware, or hardware executing corresponding software.

In a possible implementation, the apparatus includes a communication unit and a processing unit. The communication unit is configured to receive a first reference signal from a first terminal on a first beam, where the first reference signal is a demodulation reference signal of a first PSSCH or a first PSCCH, or the first reference signal is a sidelink channel state reference signal; the processing unit is configured to measure the first reference signal to obtain a beam measurement result of the first reference signal; and the communication unit is further configured to send first indication information to the first terminal on a first PSFCH or a second PSSCH, where the first indication information indicates the beam measurement result of the first reference signal.

Optionally, the communication unit is configured to receive the first reference signal from the first terminal on only the first beam between two adjacent PSFCHs.

Optionally, a resource used for the second PSSCH is a resource reserved by the first PSCCH.

Optionally, the first indication information is carried in a MAC CE.

Optionally, there is a unique correspondence between a resource used in a sending direction of the first beam and a time domain position of the first PSFCH.

Optionally, the first reference signal is in one-to-one correspondence with the first PSFCH.

Optionally, the PSSCH is used to carry a direct communication request message, and the first reference signal and the direct communication request message are in a same time unit.

Optionally, the communication unit is further configured to receive sidelink control information on the first beam, where the sidelink control information indicates that the PSSCH is used to carry the direct communication request message.

Optionally, the sidelink control information further includes a first bitmap, and the first bitmap indicates a frequency domain position of at least one first resource that carries at least one piece of first indication information.

Optionally, the at least one first resource and at least one second resource do not overlap, and the at least one second resource is used to carry feedback information of a physical sidelink shared channel and/or feedback information of inter-user equipment coordination.

Optionally, the sidelink control information further includes second indication information, the second indication information indicates a time window, and the method further includes: The second terminal sends direct communication receive information to the first terminal in the time window in a direction of a second beam.

Optionally, there is a unique correspondence between the beam training apparatus and a frequency domain resource position in which a feedback resource is located.

Optionally, the processing unit is further configured to determine a frequency domain position of a corresponding feedback resource by performing a modulo operation on a part of bandwidth by using an identifier of the beam training apparatus.

Optionally, the beam measurement result of the first reference signal includes quantization information for interval quantization on reference signal received power RSRP; the quantization information is indicated by using a sequence corresponding to a cyclic shift code of the first PSFCH; and a quantization interval to which the RSRP belongs is in one-to-one correspondence with the cyclic shift code of the first PSFCH.

Optionally, there are a plurality of quantization intervals, each quantization interval corresponds to a range of one RSRP value, the processing unit is further configured to determine, based on an RSRP value corresponding to the first reference signal, that the RSRP value corresponding to the first reference signal corresponds to a first quantization interval; and the processing unit is further configured to determine, based on the first quantization interval, a cyclic shift code of the first PSFCH corresponding to the first quantization interval.

According to a ninth aspect, a beam training apparatus is provided. The beam training apparatus may implement the method in the third aspect. For example, the beam training apparatus may be a first terminal or a chip in the first terminal. The foregoing method may be implemented by software, hardware, or hardware executing corresponding software.

In a possible implementation, the apparatus includes a communication unit and a processing unit. The communication unit is configured to send first reference signals to a second terminal on M beams corresponding to M resources, where the first reference signal is a demodulation reference signal of a PSSCH or a PSCCH, the PSCCH is used to carry sidelink control information, the sidelink control information is used to reserve N beam feedback resources, the N beam feedback resources are used to feed back beam measurement results of the M beams, the N beam feedback resources do not overlap in time domain, and both M and N are positive integers; and the communication unit is further configured to respectively receive at least one of M pieces of beam feedback information from the second terminal on at least one of the N beam feedback resources, where the at least one piece of beam feedback information indicates a beam measurement result of at least one first reference signal.

Optionally, the PSSCH is used to carry a direct communication request message.

Optionally, the sidelink control information further includes first indication information, and the first indication information indicates that the PSSCH carries the direct communication request message.

Optionally, the sidelink control information further includes second indication information, the second indication information indicates a time window, and the method further includes: The first terminal receives direct communication receive information from the second terminal in the time window in a direction of a second beam.

Optionally, the second beam is a beam corresponding to a largest beam measurement result in beam measurement results corresponding to a plurality of beams; or the second beam is any beam in a candidate beam set, and a beam measurement result corresponding to a candidate beam in the candidate beam set is greater than or equal to a specified threshold.

Optionally, in a resource pool, the sidelink control information further indicates that priorities of the N reserved beam feedback resources are the highest.

Optionally, the sidelink control information further includes third indication information, and the third indication information indicates time domain positions of the N beam feedback resources.

Optionally, the time domain position of the beam feedback resource includes an absolute symbol position or a slot position, or the time domain position of the beam feedback resource includes a slot position and a relative symbol position in a slot.

Optionally, at least two slots in which the N beam feedback resources are located are consecutive in time domain.

Optionally, a difference between a slot in which a first beam feedback resource in the N beam feedback resources is located and a slot in which an $N^{th}$ beam feedback resource in the N beam feedback resources is located is within a first threshold range.

Optionally, the N beam feedback resources correspond to $\lceil M/X \rceil$ slots, $\lceil \ \rceil$ represents rounding up, and X beam feedback resources corresponding to X beam directions are located in a same slot.

Optionally, $N=\lceil M/X \rceil$.

Optionally, M is equal to N.

Optionally, there is a unique correspondence between the second terminal and a frequency domain resource position in which a feedback resource is located.

Optionally, the processing unit is further configured to determine a frequency domain position of a corresponding feedback resource by performing a modulo operation on a part of bandwidth by using an identifier of the second terminal.

According to a tenth aspect, a beam training apparatus is provided. The beam training apparatus may implement the method in the fourth aspect. For example, the beam training apparatus may be a second terminal or a chip in the second terminal. The foregoing method may be implemented by software, hardware, or hardware executing corresponding software.

In a possible implementation, the apparatus includes a communication unit and a processing unit. The communication unit is configured to receive first reference signals from a first terminal on M beams corresponding to M resources, where the first reference signal is a demodulation reference signal of a PSSCH or a PSCCH, the PSCCH is used to carry sidelink control information, the sidelink control information is used to reserve N beam feedback resources, the N beam feedback resources are used to feed back beam measurement results of the M beams, the N beam feedback resources do not overlap in time domain, and both M and N are positive integers; the processing unit is configured to measure the M first reference signals to obtain M pieces of beam feedback information; and the communication unit is further configured to send at least one of the M pieces of beam feedback information to the first terminal on at least one of the N beam feedback resources.

Optionally, the PSSCH is used to carry a direct communication request message.

Optionally, the sidelink control information further includes first indication information, and the first indication information indicates that the PSSCH carries the direct communication request message.

Optionally, the sidelink control information further includes second indication information, the second indication information indicates a time window, and the method further includes: The second terminal sends direct communication receive information to the first terminal in the time window in a direction of a second beam.

Optionally, the second beam is a beam corresponding to a largest beam measurement result in beam measurement results corresponding to a plurality of beams; or the second beam is any beam in a candidate beam set, and a beam measurement result corresponding to a candidate beam in the candidate beam set is greater than or equal to a specified threshold.

Optionally, in a resource pool, the sidelink control information further indicates that priorities of the N reserved beam feedback resources are the highest.

Optionally, the sidelink control information further includes third indication information, and the third indication information indicates time domain positions of the N beam feedback resources.

Optionally, the time domain position of the beam feedback resource includes an absolute symbol position or a slot position, or the time domain position of the beam feedback resource includes a slot position and a relative symbol position in a slot.

Optionally, at least two slots in which the N beam feedback resources are located are consecutive in time domain.

Optionally, a difference between a slot in which a first beam feedback resource in the N beam feedback resources is located and a slot in which an $N^{th}$ beam feedback resource in the N beam feedback resources is located is within a first threshold range.

Optionally, the N beam feedback resources correspond to $\lceil M/X \rceil$ slots, and X beam feedback resources corresponding to X beam directions are located in a same slot.

Optionally, $N = \lceil M/X \rceil$.

Optionally, M is equal to N.

Optionally, there is a unique correspondence between the beam training apparatus and a frequency domain resource position in which a feedback resource is located.

Optionally, the processing unit is further configured to determine a frequency domain position of a corresponding feedback resource by performing a modulo operation on a part of bandwidth by using an identifier of the second terminal.

According to an eleventh aspect, a communication apparatus is provided. The communication apparatus may implement the method in the fifth aspect. For example, the communication apparatus may be a first terminal or a chip in the first terminal. The foregoing method may be implemented by software, hardware, or hardware executing corresponding software.

In a possible implementation, the apparatus includes a communication unit and a processing unit. The communication unit is configured to send second information to a second terminal in a first time unit by using a third beam, where the second information indicates that the first terminal is to send third information in a second time unit by using a fourth beam; and the communication unit is further configured to send the third information to the second terminal in the second time unit by using the fourth beam.

According to a twelfth aspect, a communication apparatus is provided. The communication apparatus may implement the method in the sixth aspect. For example, the communication apparatus may be a second terminal or a chip in the second terminal. The foregoing method may be implemented by software, hardware, or hardware executing corresponding software.

In a possible implementation, the apparatus includes a communication unit and a processing unit. The communication unit is configured to receive second information from a first terminal in a first time unit by using a third beam, where the second information indicates that the first terminal is to send third information in a second time unit by using a fourth beam; the processing unit is configured to determine, based on the second information, a receive beam direction for receiving, in the second time unit, information sent by the first terminal; and the communication unit is configured to receive the third information from the first terminal in the second time unit by using the fourth beam.

With reference to any one of the seventh aspect to the twelfth aspect, in another possible implementation, the beam training apparatus includes a processor coupled to a memory, and the processor is configured to support the apparatus in performing a corresponding function in the foregoing communication method. The memory is configured to be coupled to the processor, and the memory stores a computer program (or computer-executable instructions) and/or data necessary for the apparatus. Optionally, the beam training apparatus may further include a communication interface, configured to support communication between the apparatus and another network element, for example, sending or receiving of data and/or a signal. For example, the communication interface may be a transceiver, a circuit, a bus, a module, or a communication interface of another type. Optionally, the memory may be located inside the beam training apparatus and integrated with the processor, or may be located outside the beam training apparatus.

With reference to any one of the seventh aspect to the twelfth aspect, in another possible implementation, the beam training apparatus includes a processor and a transceiver apparatus, the processor is coupled to the transceiver apparatus, and the processor is configured to execute a computer program or instructions, to control the transceiver apparatus to receive and send information; and when the processor executes the computer program or the instructions, the processor is further configured to implement the foregoing method through a logic circuit or by executing code instructions. The transceiver apparatus may be a transceiver, a transceiver circuit, an interface circuit, or an input/output interface, and is configured to receive a signal from a beam training apparatus other than the beam training apparatus and transmit the signal to the processor, or send a signal from the processor to a beam training apparatus other than the beam training apparatus. When the beam training apparatus is a chip, the transceiver apparatus is a transceiver circuit or an input/output interface.

When the beam training apparatus is a chip, a sending unit may be an output unit, for example, an output circuit or a communication interface; and a receiving unit may be an input unit, for example, an input circuit or a communication interface. When the beam training apparatus is a terminal, a sending unit may be a transmitter or a transmitter machine; and a receiving unit may be a receiver or a receiver machine.

According to a thirteenth aspect, a communication system is provided. The communication system includes the beam training apparatus according to the seventh aspect and the beam training apparatus according to the eighth aspect.

According to a fourteenth aspect, a communication system is provided. The communication system includes the beam training apparatus according to the ninth aspect and the beam training apparatus according to the tenth aspect.

According to a fifteenth aspect, a computer-readable storage medium is provided, and the computer-readable storage medium stores a computer program or instructions. When the program or the instructions are executed by a processor, the method according to any aspect or any implementation in the first aspect to the sixth aspect is performed.

According to a sixteenth aspect, a computer program product is provided. When the computer program product is executed on a computing device, the method according to any aspect or any implementation in the first aspect to the sixth aspect is performed.

According to a seventeenth aspect, a circuit is provided. The circuit is coupled to a memory, and the circuit is configured to perform the method according to any aspect or any implementation in the first aspect to the sixth aspect. The circuit may include a chip circuit.

## BRIEF DESCRIPTION OF DRAWINGS

FIG. 1 is a diagram of an architecture of a communication system to which an embodiment of this application is applied;
FIG. 2 is a diagram of C-V2X according to an embodiment of this application;
FIG. 3 is a diagram of beam management according to an embodiment of this application;
FIG. 4 is a diagram of a time domain resource in an SL communication resource pool according to an embodiment of this application;
FIG. 5 is a diagram of a frequency resource in an SL communication resource pool according to an embodiment of this application;
FIG. 6 is a diagram of a resource on which a PSFCH is located according to an embodiment of this application;
FIG. 7 is a diagram of indication of a PSFCH resource bitmap according to an embodiment of this application;
FIG. 8 is a diagram of a correspondence between a PSSCH and a PSFCH time domain resource according to an embodiment of this application;
FIG. 9 is a diagram of PSFCH frequency domain resource allocation according to an embodiment of this application;
FIG. 10 is a simplified flowchart of layer-2 unicast link establishment according to an embodiment of this application;
FIG. 11 is a diagram of a half-duplex problem of S-SSB sweeping;
FIG. 12 is a diagram of a relationship between a terminal and a network coverage area according to an embodiment of this application;
FIG. 13 is a schematic flowchart of a beam training method according to an embodiment of this application;
FIG. 14 shows an example beam training process according to an embodiment of this application;
FIG. 15 is a diagram of a resource for sending a beam measurement result by multiplexing a PSFCH according to an embodiment of this application;
FIG. 16 is a schematic flowchart of another beam training method according to an embodiment of this application;
FIG. 17 is a diagram of reserving a beam feedback resource according to an embodiment of this application;
FIG. 18 is a diagram of an example of a beam feedback resource included in a slot according to an embodiment of this application;
FIG. 19 is a diagram of a structure of a CSI-RS resource in a current SL;
FIG. 20 is a diagram of a structure of a CSI-RS resource in an SL according to an embodiment of this application;
FIG. 21 is a diagram of a structure of a CSI-RS resource in another SL according to an embodiment of this application;
FIG. 22 is a schematic flowchart of another communication method according to an embodiment of this application;
FIG. 23 is a diagram of a structure of a beam training apparatus according to an embodiment of this application; and
FIG. 24 is a diagram of a structure of another beam training apparatus according to an embodiment of this application.

**DESCRIPTION OF EMBODIMENTS**

The following describes embodiments of this application with reference to the accompanying drawings in embodiments of this application.

Embodiments of this application may be applied to various communication systems, for example, a long term evolution (long term evolution, LTE) system, LTE time division duplex (time division duplex, TDD), a 5th generation (5th generation, 5G) communication system, and a future 6th generation (6th generation, 6G) communication system.

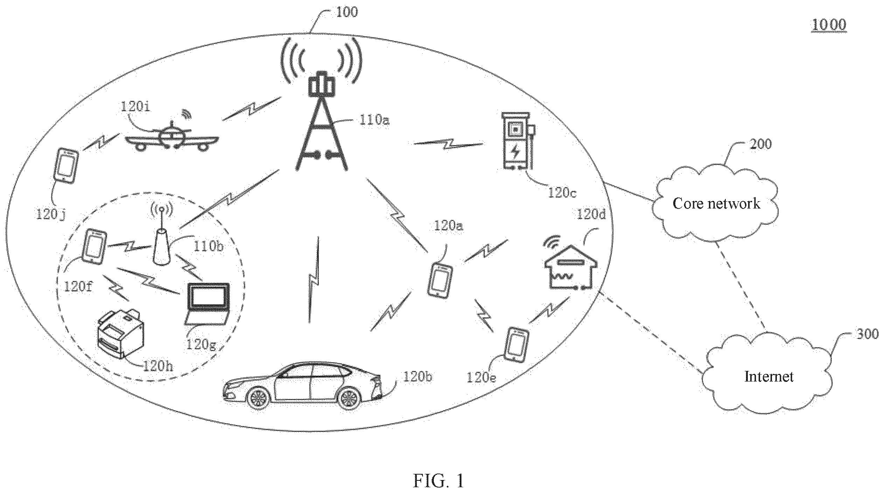

FIG. 1 is a diagram of an architecture of a communication system to which an embodiment of this application is applied. As shown in FIG. 1, the communication system 1000 includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different independent physical devices, or functions of the core network device and logical functions of the radio access network device may be integrated into a same physical device, or a part of functions of the core network device and a part of functions of the radio access network device may be integrated into one physical device. A wired or wireless manner may be used for connection between terminals and between radio access network devices. FIG. 1 is merely an example diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like, or may be a module or unit that completes some functions of the base station, for example, may be a central unit (central unit, CU), or may be a distributed unit (distributed unit, DU). The radio access network device may be a macro base station (such as 110a in FIG. 1), or may be a micro base station or an indoor base station (such as 110b in FIG. 1), or may be a relay node or a donor node. Neither of a specific technology and a specific device form used for the radio access network device is limited in embodiments of this application. For ease of description, the following provides descriptions by using an example in which the radio access network device is a base station.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearables, smart transportation, and smart city. The terminal may be a mobile phone, a tablet computer, a computer with wireless sending and receiving functions, a wearable device, a vehicle, an uncrewed aerial vehicle, a helicopter, an airplane, a ship, a robot, a robot arm, a smart home device, a road side unit (road side unit, RSU), an in-vehicle module, a chip, an entire vehicle, or the like. Neither of a specific technology and a specific device form used for the terminal is limited in embodiments of this application.

The base station and the terminal may be fixed or movable. The base station and the terminal may be deployed on land, including an indoor or outdoor device, a handheld device, or a vehicle-mounted device; or may be deployed on a water surface; or may be deployed on a plane, a balloon, or an artificial satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a function of a base station, and 120a to 120j in FIG. 1 may be referred to as communication apparatuses having a function of a terminal.

Communication may be performed between a base station and a terminal, between base stations, or between terminals by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource for wireless communication is not limited in embodiments of this application.

In embodiments of this application, the function of the base station may alternatively be performed by a module (for example, a chip) in the base station, or may be performed by a control subsystem including the function of the base station. The control subsystem including the function of the base station herein may be a control center in the foregoing application scenarios such as smart grid, industrial control, smart transportation, and smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell to which the terminal establishes the wireless connection is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol, or may be a discrete Fourier transform-spread-orthogonal frequency division multiplexing (Discrete Fourier Transform-spread-OFDM, DFT-s-OFDM) symbol. Unless otherwise specified, all symbols in embodiments of this application are time domain symbols.

It may be understood that, in embodiments of this application, a physical downlink shared channel (physical downlink shared channel, PDSCH), a physical downlink control channel (physical downlink control channel, PDCCH), and a physical uplink shared channel (physical uplink shared channel, PUSCH) are merely examples of a downlink data channel, a downlink control channel, and an uplink data channel respectively. In different systems and different scenarios, a data channel and a control channel may have different names. This is not limited in embodiments of this application.

Cellular vehicle-to-everything (cellular vehicle-to-everything, C-V2X) communication

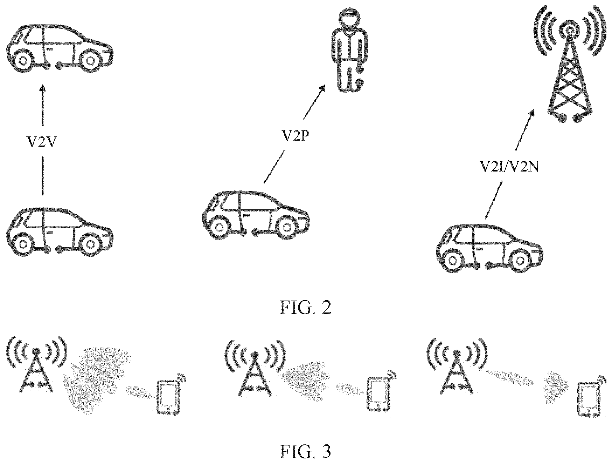

C-V2X is a V2X communication technology developed based on a cellular system. C-V2X utilizes and enhances current cellular network functions and elements to achieve low-latency and high-reliability communication between various nodes in a vehicle network. FIG. 2 is a diagram of C-V2X according to an embodiment of this application. C-V2X includes vehicle to vehicle (vehicle to vehicle, V2V) communication, vehicle to pedestrian (vehicle to pedestrian, V2P) communication, vehicle to infrastructure (vehicle to infrastructure, V2I) communication, and vehicle to network (vehicle to network, V2N) communication. With evolution of a cellular system from 4G long term evolution (long term evolution, LTE) to 5G, C-V2X also evolves from LTE-V2X to NR-V2X (new radio V2X).

V2X communication has great potential in reducing vehicle collision accidents, thereby reducing a corresponding quantity of casualties. Advantages of V2X are not limited to improving safety. A vehicle that can perform V2X communication helps better perform traffic management, and further facilitates green transportation and lower energy consumption. An intelligent transportation system (intelligent transportation system, ITS) is an application that integrates V2X. Based on a V2X technology, a vehicle user (vehicle UE, V-UE) can send some information such as a position, a speed, and an intent (turning, lane merging, or reversing) of the vehicle user and information triggered by periodic events and some aperiodic events to surrounding V-UE. Similarly, the V-UE also receives information about a surrounding user in real time. 5G NR V2X can support a lower transmission latency, more reliable communication transmission, a higher throughput, and better user experience, and meet requirements of more extensive application scenarios. Further, a vehicle-to-vehicle communication technology supported by V2X may be further applied to device-to-device (device-to-device, D2D) communication in any system.

Sidelink communication may be performed between terminals. In other words, direct communication may be performed between the terminals without forwarding by a network device. In this case, a link through which the terminals are directly connected to each other is referred to as a sidelink.

Generally, in a sidelink technology, the terminals may perform direct information connection through a PC5 interface between the terminals. In this application, the sidelink may be represented by using English "Sidelink", or may be represented by using "sidelink". "Sidelink" and "sidelink" have a same meaning, and both are English expressions of the sidelink in this application. This technology can provide information exchange not only in a service coverage area of a network device, but also in a place without coverage of the network device. A terminal that is authorized to perform special communication may use a sidelink communication manner. Certainly, sidelink communication may be used to transmit service data of intelligent transportation, or may be used to transmit a mobile internet service. This is not limited in this application.

Resource allocation mode over a PC5 interface

In V2X, a network device may configure a resource pool for SL communication of a V2X terminal, and the resource pool is a set of time-frequency resources.

Two resource allocation modes over the PC5 interface are as follows: a mode 1 (mode 1) and a mode 2 (mode 2). In the mode 1, a base station allocates a transmission resource to V2X through a Uu interface. Therefore, UE in the mode 1 needs to be within a network coverage area. An SL spectrum resource may be shared with an uplink communication resource. In SL communication, the mode 1 and the mode 2 may be allocated different resource pools, or may share a resource pool. Resource pool sharing can improve resource utilization, but may easily cause a conflict between the mode 1 and the mode 2. Therefore, the UE in the mode 1 notifies UE in the mode 2 of a resource allocated for future transmission.

Optionally, in an implementation of the mode 2 (mode 2), a terminal senses, in a (pre)configured resource pool, resources that are not used by another terminal, and selects an appropriate quantity of such resources for transmission of the terminal. V2X supports a resource sensing (sensing) process and a resource selection or reselection process in the mode 2. In the sensing process, SCI information of another terminal or another sidelink measurement result may be further demodulated, and demodulated SCI information reflects a resource usage on a sidelink. In the resource selection or reselection process, a resource used for sidelink transmission may be determined based on a result of the foregoing sensing process.

Configuration and preconfiguration

In this application, both the configuration and the preconfiguration are used. The configuration means that a network device or a server sends configuration information of some parameters or values of parameters to a terminal by using a message or signaling, so that the terminal determines a parameter for communication or a resource for transmission based on the values or the information. The preconfiguration is similar to the configuration. The preconfiguration may be a manner in which a network device or a server sends parameter information or values to a terminal through a carrier or another link different from a sidelink; or may be a manner in which a corresponding parameter or parameter value is defined, or a related parameter or value is written into a terminal in advance. This is not limited in this application. Further, the values and parameters may be changed or updated.

Beam management

A beam is a communication resource. Beams may be classified into transmit beams and receive beams. A technology for forming the beam may be a beamforming technology or another technical means. Beamforming includes transmit beamforming and receive beamforming.

Transmit beam: is a beam that has a spatial directivity and that is formed by a signal sent by a transmitter device by using a specific beamforming weight. In an uplink direction, the transmitter device may be a terminal. In a downlink direction, the transmitter device may be a network device.

Receive beam: is a beam that has a spatial directivity and that is formed by a signal received by a receiver device by using a specific beamforming weight. In an uplink direction, the receiver device may be a network device. In a downlink direction, the receiver device may be a terminal.

For sidelink transmission, both the transmitter device and the receiver device may be terminals.

Transmit beamforming: When a transmitter device with an antenna array sends a signal, a specific amplitude and phase are set on each antenna element of the antenna array, so that the sent signal has a specific spatial directivity, that is, the signal has high power in some directions, and has low power in some directions. A direction with highest signal power is a direction of a transmit beam. The antenna array includes a plurality of antenna elements. The additional specific amplitude and phase are a beamforming weight.

Receive beamforming: When a receiver device with an antenna array receives a signal, a specific amplitude and phase are set on each antenna element of the antenna array, so that a power gain of the received signal is directional, that is, a power gain is high when signals in some directions are received, and a power gain is low when signals in some directions are received. A direction with a highest power gain when the signal is received is a direction of a receive beam. The antenna array includes a plurality of antenna elements. The additional specific amplitude and phase are a beamforming weight.

Sending a signal by using a transmit beam means sending the signal by using a beamforming weight.

Receiving a signal by using a receive beam means receiving the signal by using a beamforming weight.

Different beams may be considered as different resources. Same information or different information may be sent by using (or through) different beams. A beam pair is established based on the concept of the beam. One beam pair usually includes one transmit beam of a transmitter device and one receive beam of a receiver device. It should be noted that, if no description is provided, for sidelink communication, a transmit beam in the following is a transmit beam of a terminal device, and a receive beam is a receive beam of a terminal.

In addition, that the terminal sends a signal or information to another terminal on a beam may be understood as that the terminal sends the signal or information to the another terminal by using a time-frequency resource, but sending of the signal or information is directional.

In a communication system such as a 5G new radio (new radio, NR) system, both a network device and a terminal may generate one or more transmit beams and one or more receive beams. Before data is transmitted, beam alignment needs to be performed.

Beam management is an important technology proposed for a frequency range 2 (frequency ranges 2, FR2) in 5G NR, means a process in which a gNB and UE obtain and maintain a set of beams used for sending and receiving, and is a reference workflow for beamforming in a multiple-input multiple-output (multiple-input multiple-output, MIMO) system. Frequency ranges of FR1 and FR2 are defined in the following Table 1.

Table 1: Frequency range definition

| Frequency range name | Corresponding frequency range |
|---|---|
| FR1 | 410 MHz-7125 MHz |
| FR2 | 24250 MHz-52600 MHz |

Beam management includes two important functions: beam training and beam failure recovery. Beam training includes transmit beam training and receive beam training, and may be divided into three steps. FIG. 3 is a diagram of beam management according to an embodiment of this application. Operations in the steps are summarized as follows:

P-1: A gNB sends a reference signal (reference signal, RS) based on a transmit beam set, where transmit beams in the set correspond to different transmit directions, and UE selects a transmit beam of the gNB and a receive beam of the UE through beam measurement and feedback.

P-2: On the basis of P-1, the gNB sends an RS based on a smaller transmit beam set, and the UE performs beam measurement and feedback, to improve the transmit beam of the gNB.

P-3: The gNB sends an RS by using a transmit beam, and the UE performs beam measurement, to improve the receive beam of the UE.

Based on the foregoing three steps, downlink beam training of 5G NR is performed. In particular, in step P-1 of the beam training, a possible RS is a synchronization signal block (synchronization signal block, SSB). Therefore, the gNB may configure a maximum of 64 transmit beams, where each beam corresponds to one SSB and a time-frequency resource used by the UE for feedback. The gNB sequentially sends an SSB on each beam in a sweeping manner, and the UE performs measurement to obtain reference signal received power (reference signal received power, RSRP) of the SSB and performs feedback.

Physical channel in sidelink communication

A physical sidelink control channel (physical sidelink control channel, PSCCH) is used to carry sidelink control information (sidelink control information, SCI).

SCI of an NR SL system is classified into first-stage SCI and second-stage SCI. The PSCCH is used to carry the first-stage SCI, and the first-stage SCI is used to schedule the second-stage SCI and a PSSCH. Because an SL is a distributed system, all UEs can decode the second-stage SCI and the PSSCH only after correctly decoding the first-stage SCI. However, to reduce complexity of blind detection (blind decoding) performed by the UE on the PSCCH, a resource position of the PSCCH is relatively fixed, and format information of the carried first-stage SCI is also relatively unique. That is, the UE does not need to blindly detect a time-frequency resource position of the PSCCH, and does not need to blindly detect SCI in different formats. The UE needs only to detect, at a fixed PSCCH time-frequency resource position, whether there is the first-stage SCI. The PSCCH may exist on each sub-channel in each slot. To be specific, a time domain start position of a PSCCH is a second symbol used for SL transmission in each slot, and a length is two or three symbols (which is determined by resource pool configuration information). A frequency domain position of the PSCCH is a smallest physical resource block index (PRB index) of each sub-channel, and a length is at least 10 physical resource blocks (physical resource block, PRB) (which is determined by the resource pool configuration information) but does not exceed a size of the sub-channel.

A physical sidelink shared channel (physical sidelink shared channel, PSSCH) is used to carry at least one of control information, data, and sidelink CSI feedback information.

A physical sidelink feedback channel (physical sidelink feedback channel, PSFCH) is used for sidelink feedback information. The sidelink feedback information may be used for data information (which includes hybrid automatic repeat request (hybrid automatic repeat request, HARQ) acknowledgment feedback information, for example, acknowledgment (acknowledge, ACK) or negative acknowledgment (negative acknowledge, NACK), and may further include channel state information (channel state information, CSI) feedback information), and may further indicate at least one of the following information: energy saving information and resource auxiliary information (including a resource recommended for use, a resource not recommended for use, a resource collision, a resource reservation conflict, a half-duplex conflict that has occurred or is to occur in the future, and the like).

A physical sidelink broadcast channel (physical sidelink broadcast channel, PSBCH) is used to carry information related to sidelink synchronization and the like.

A channel state reference signal (CSI reference signal, CSI-RS) is an important reference signal used to measure channel quality.

A phase tracking reference signal (phase tracking reference signal, PT-RS) is used for phase noise tracking and compensation.

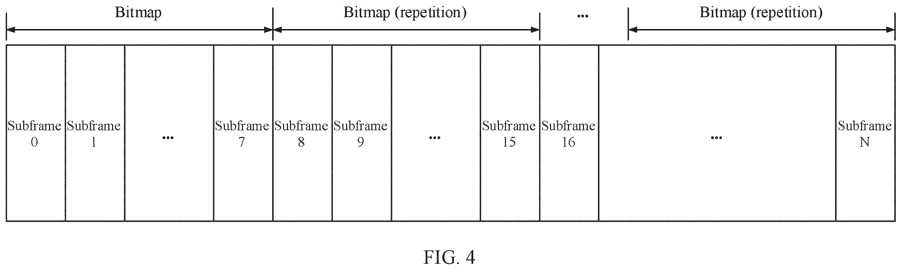

A time-frequency resource for SL communication is configured by using an SL communication resource pool. The SL communication resource pool may be considered as a set of time resources and frequency resources used for SL communication. For a time resource, a base station uses a bitmap (bitmap) and periodically repeats the bitmap to indicate all subframes in a system, to indicate a time domain resource set of a subframe used for SL communication. FIG. 4 is a diagram of a time domain resource in an SL communication resource pool according to an embodiment of this application. A length of the bitmap is 8 bits, a quantity of symbols occupied for SL transmission in each subframe is fixed M symbols, and M is defined as one SL time domain transmission duration or one time domain transmission unit.

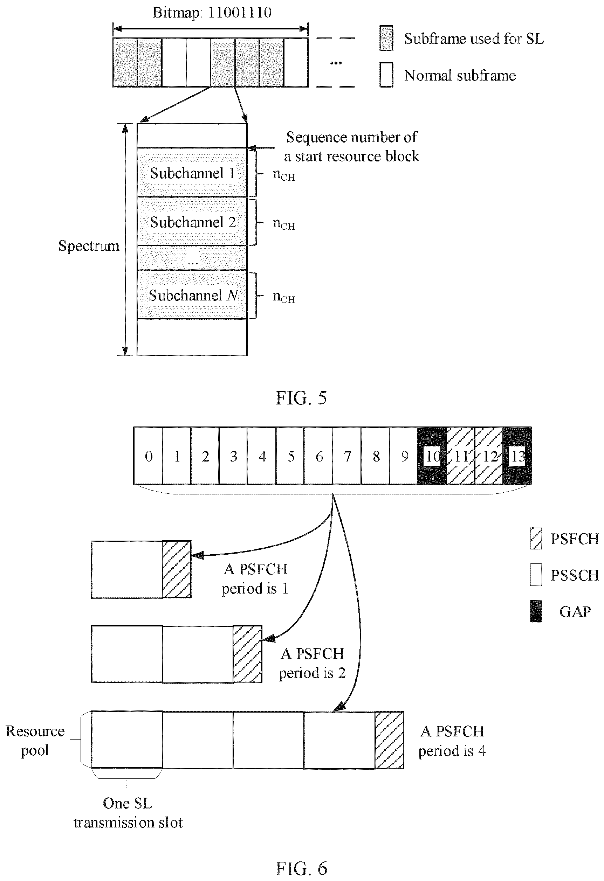

For a frequency resource in the SL communication resource pool, a base station divides a frequency band used for SL communication into several sub-channels, and each sub-channel includes a particular quantity of resource blocks. FIG. 5 is a diagram of a frequency resource in an SL communication resource pool according to an embodiment of this application. The base station may indicate a sequence number of a first resource block of a frequency resource used for SL communication, a total quantity N of sub-channels included in the communication resource pool, and a quantity $n_{CH}$ of resource blocks included in each sub-channel. One SL transmission may occupy one or more sub-channels. When an SL communication resource is scheduled, scheduling in frequency domain is performed at a granularity of sub-channel.

NR-V2X supports HARQ-ACK feedback at a physical layer. To be specific, for one PSSCH transmission, if a transmitter device includes HARQ-ACK feedback enabling information in control information, a receiver device needs to feed back response ACK/NACK information based on a current PSSCH decoding result. The ACK/NACK information is transmitted through a PSFCH channel. A PSFCH channel resource is a periodic resource configured in the resource pool, and a periodic configuration parameter $N_{\text{PSSCH}}^{\text{PSFCH}}$ of the PSFCH channel resource may be 0, 1, 2, or 4. $N_{\text{PSSCH}}^{\text{PSFCH}} = 0$ indicates that there is no PSFCH resource configuration in the resource pool, and PSFCH sending is not enabled in the resource, that is, physical layer HARQ feedback is not supported. $N_{\text{PSSCH}}^{\text{PSFCH}} = 1,2,4$ indicates that there is one PSFCH feedback slot every $N_{\text{PSSCH}}^{\text{PSFCH}}$ SL slots in a time window. As shown in FIG. 6, in a slot in which a physical resource of the PSFCH is located, the PSFCH occupies last two symbols before a gap (GAP).

If a PSFCH feedback resource is configured in the resource pool, the PSFCH feedback resource is configured once every N slots. In a scenario of a V2X transmission mode 2, different from base station scheduling, a user needs to autonomously select a PSSCH sending resource based on a sensing result of the user. To simplify a PSFCH resource selection process, NR-V2X configures a PSFCH feedback resource for each PSSCH sub-channel. A specific process of determining a PSFCH resource corresponding to each sub-channel is as follows:

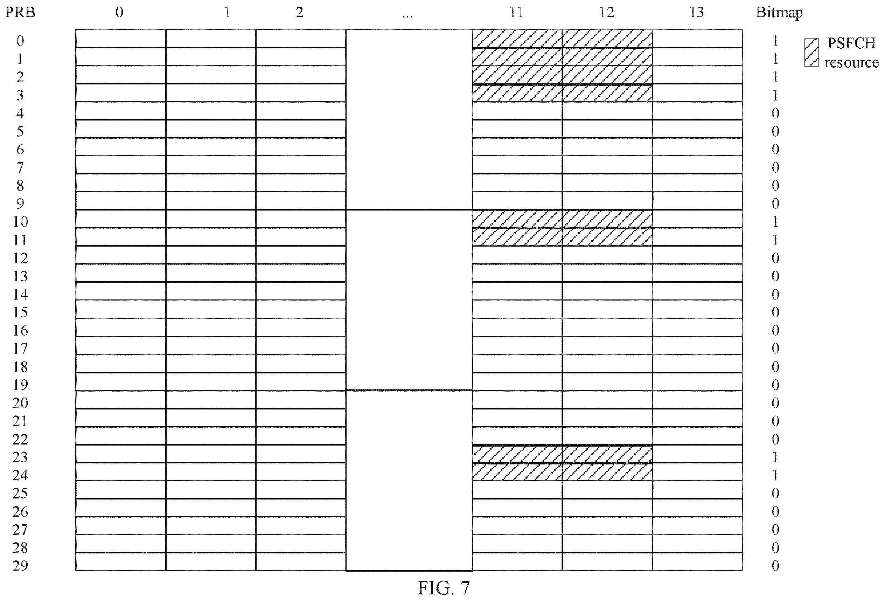

1. A bitmap (bitmap) of a PSFCH frequency domain resource is configured in the resource pool, to indicate whether a specific PRB on a frequency domain resource in which the resource pool is located can be used as a PSFCH resource. To be specific, a length of bit information included in the bitmap is equal to a quantity of PRBs in the resource pool. 1 in the bitmap indicates that a corresponding PRB can be used for PSFCH transmission, and a bit 0 indicates that a corresponding PRB resource cannot be used for PSFCH transmission. A leftmost bit of the bitmap indicates a lowest PRB index in the resource pool. Particularly, a PSFCH resource may be used for HARQ-ACK transmission, and a resource thereof is represented by an *sl-PSFCH-RB-Set* bitmap. A bit 1 in the bitmap indicates that a corresponding PRB resource can be used for HARQ-ACK feedback. In addition, the PSFCH resource may also be used to indicate a conflict in an inter-user coordination (inter-UE coordination, IUC) Scheme2 mode, and a resource thereof is represented by a bitmap corresponding to *sl-RB-SetPSFCH.* In the bitmap, 1 indicates that a corresponding PRB resource can be used to indicate a conflict in Scheme2. It should be noted that positions of bits 1 in *sl-PSFCH-RB-Set* and *sl-RB-SetPSFCH* do not overlap. FIG. 7 is a diagram of indication of a PSFCH resource bitmap according to an embodiment of this application. In a slot having a PSFCH transmission resource, if one sub-channel includes 10 PRBs and a resource pool has three sub-channels in total, a bitmap indicating PSFCH frequency domain resources in the resource pool includes 3×10=30 bits in total to indicate whether each PRB can be used for PSFCH transmission. In FIG. 7, the bitmap indicates that first four PRBs of a first sub-channel may be used for PSFCH feedback, and the bitmap may indicate the foregoing HARQ-ACK resource, or may indicate a scheme2 conflict resource.

2. Because every N PSSCH slots correspond to one PSFCH feedback slot, for a resource pool including $N_{\text{subch}}$ sub-channels, a quantity of RBs of a PSFCH feedback resource corresponding to each sub-channel is

$$M_{\text{subch, slot}}^{\text{PSFCH}} = M_{\text{PRB, set}}^{\text{PSFCH}} / \left( N_{\text{subch}} \cdot N_{\text{PSSCH}}^{\text{PSFCH}} \right) ,$$ where $M_{\text{PRB, set}}^{\text{PSFCH}}$ represents a quantity of PRBs of a PSFCH frequency domain resource, that is, indicates a total quantity of bits 1 in a bitmap of the PSFCH frequency domain resource.

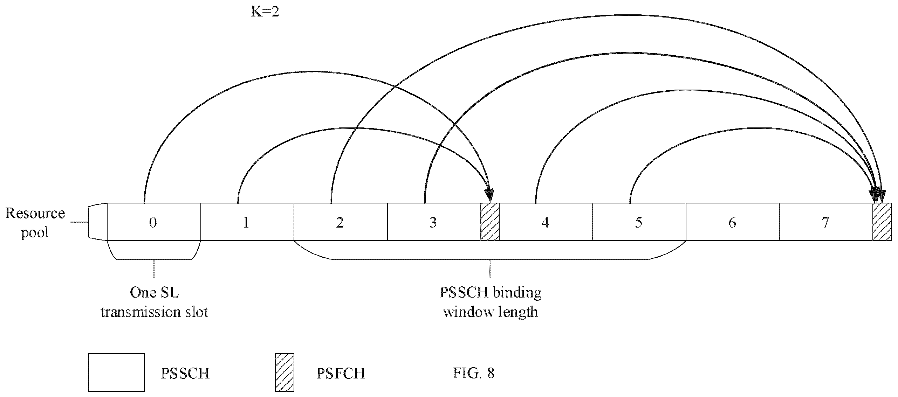

3. Considering a limitation of a decoding capability of the receiver device, the receiver device cannot immediately perform feedback after receiving a PSSCH. Therefore, a time interval $K$ for PSSCH feedback is defined in the standard. To be specific, a PSFCH is transmitted, for the PSSCH, in a first available slot including a PSFCH resource. The slot and a slot in which the PSSCH is located are spaced by at least $K$ slots, where a value of $K$ is configured by the resource pool. FIG. 8 is a diagram of a correspondence between a PSSCH and a PSFCH time domain resource according to an embodiment of this application. When K = 2, for PSSCHs carried in slots 0 and 1, feedback may be performed on a PSFCH resource in a slot 3, and for PSSCHs carried in slots 2, 3, 4, and 5, feedback is performed on a PSFCH resource in a slot 7. In addition, because feedback for the slots 2, 3, 4, and 5 is performed on the PSFCH resource in one slot, the slots 2, 3, 4, and 5 may be referred to as a PSSCH bundling window length.

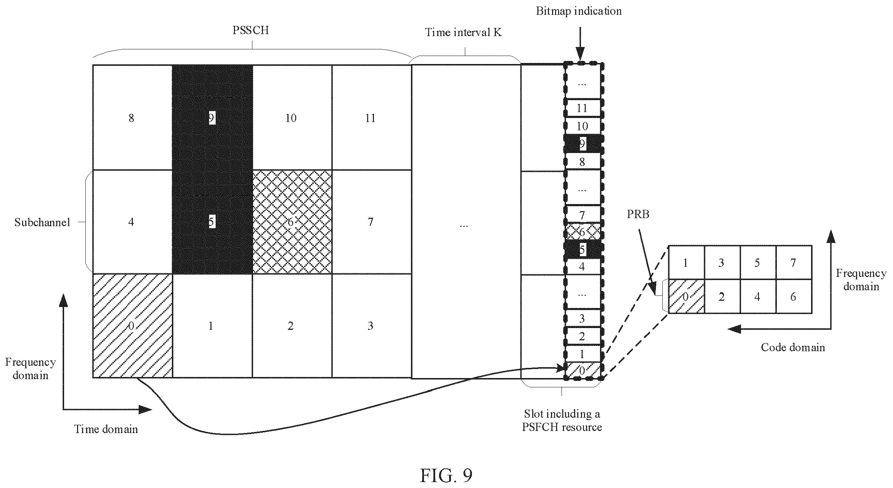

4. Available PSFCH resources in a PSFCH feedback slot are sequentially allocated, in a manner of time domain first and then frequency domain, to each sub-channel in a feedback period. FIG. 9 is a diagram of PSFCH frequency domain resource allocation according to an embodiment of this application. When $N_{\mathrm{PSSCH}}^{\mathrm{PSFCH}} = 4$, a PSFCH resource corresponding to each sub-channel in four bundled PSSCH slots is a PSFCH feedback resource of one PRB allocated to each sub-channel in each slot. Using a formula for representation, for an $i^{\mathrm{th}}$ slot in N bundled PSSCH slots, if a frequency domain sub-channel number of the slot in the resource pool is $j$, a PSFCH resource corresponding to the slot is $\left[\left(i + j \cdot N_{\mathrm{PSSCH}}^{\mathrm{PSFCH}}\right) \cdot M_{\mathrm{subch,\,slot}}^{\mathrm{PSFCH}}, \left(i + 1 + j \cdot N_{\mathrm{PSSCH}}^{\mathrm{PSFCH}}\right) \cdot M_{\mathrm{subch,\,slot}}^{\mathrm{PSFCH}} - 1\right]$. If a user occupies two sub-channels for transmission, for example, a PSSCH 5 and a PSSCH 9 in the figure, corresponding PSFCH resources are also 5 and 9, and are inconsecutive in frequency domain.

For PSFCH feedback, a NACK and a NACK form a pair, and both are represented by different orthogonal sequences, that is, represented differently in code domain. A quantity of valid pairs may be configured by using a parameter, and is *numMaxCSPair* = {1, 2, 3, 4, 6}, and correspondingly, a maximum of {2, 4, 6, 8,12} pieces of information can be fed back.

NR-V2X supports three scenarios: unicast, multicast, and broadcast. Physical layer HARQ feedback is supported for unicast and multicast. There are two multicast scenarios: multicast 1 and multicast 2.

In a unicast scenario, a transmitter device and a receiver device form a unicast connection pair. After correctly receiving control information from the transmitter device, if a PSSCH is correctly decoded based on HARQ enabling indication information of the control information, the receiver device sends a PSFCH sequence carrying ACK information to the transmitter device. Otherwise, the receiver device feeds back a PSFCH sequence carrying NACK information.

In a multicast 1 (NACK-only) scenario, if a user in a group can correctly decode a PSCCH corresponding to a PSSCH but PSSCH decoding fails, a PSFCH sequence carrying NACK information is fed back. Otherwise, no information is fed back.

In a multicast 2 (NACK/ACK) scenario, if a user in a group can correctly decode a PSCCH corresponding to a PSSCH, and PSSCH decoding fails based on HARQ enabling indication information of control information, a PSFCH sequence carrying NACK information is fed back. Otherwise, a PSFCH sequence carrying NACK information is fed back.

It can be learned from the foregoing description that if one PSSCH occupies $N_{\mathrm{subch}}^{\mathrm{PSSCH}}$ sub-channels, the PSSCH corresponds to $N_{\mathrm{subch}}^{\mathrm{PSSCH}} \cdot M_{\mathrm{subch,\,slot}}^{\mathrm{PSFCH}} \cdot N_{\mathrm{CS}}^{\mathrm{PSFCH}}$ PSFCH feedback resource pairs, where $N_{\mathrm{CS}}^{\mathrm{PSFCH}}$ represents a quantity of PSFCH sequence pairs that can be multiplexed on a PSFCH resource of one PRB configured in a resource pool, and $M_{\mathrm{subch,\,slot}}^{\mathrm{PSFCH}}$ represents a quantity of PRBs of a PSFCH resource allocated to each sub-channel. In addition, the resource pool may further limit, by configuring $N_{\mathrm{type}}^{\mathrm{PSFCH}}$, a PSFCH feedback resource that can be used by a receiver device of the PSSCH. There are the following two solutions:

1. If the resource pool configures $N_{\mathrm{type}}^{\mathrm{PSFCH}} = 1$, the receiver device of the PSSCH can use only a PSFCH resource corresponding to the first sub-channel of the PSSCH, that is, $R_{\mathrm{PRB,\,CS}}^{\mathrm{PSFCH}} = M_{\mathrm{subch,\,slot}}^{\mathrm{PSFCH}} \cdot N_{\mathrm{CS}}^{\mathrm{PSFCH}}$. As shown in FIG. 9, when the PSSCH occupies two sub-channels numbered 5 and 9 for data transmission, the receiver device of the PSSCH can use only a PSFCH resource numbered 5 for feedback.

2. If the resource pool configures $N_{\mathrm{type}}^{\mathrm{PSFCH}} = N_{\mathrm{subch}}^{\mathrm{PSSCH}}$, the receiver device of the PSSCH can use PSFCH resources corresponding to all sub-channels of the PSSCH for feedback, that is, $R_{\mathrm{PRB,\,CS}}^{\mathrm{PSFCH}} = N_{\mathrm{subch}}^{\mathrm{PSSCH}} \cdot M_{\mathrm{subch,\,slot}}^{\mathrm{PSFCH}} \cdot N_{\mathrm{CS}}^{\mathrm{PSFCH}}$.

The transmitter device selects a resource corresponding to a $\left[(P_{\mathrm{ID}} + M_{ID})mod R_{\mathrm{PRB},\,CS}^{\mathrm{PSFCH}}\right]^{\mathrm{th}}$ PSFCH resource pair to feed back a PSFCH, where $P_{\mathrm{ID}}$ represents a physical layer source address ID carried in control information, and for multicast 2, $M_{ID}$ is an ID configured by a higher layer of each receiver device for current PSSCH information transfer. Otherwise, $M_{ID} = 0$. $R_{\mathrm{PRB},\,CS}^{\mathrm{PSFCH}}$ PSFCH resource pairs are arranged in ascending order in a manner of frequency domain index first and then code domain index in all PSFCH sequences, that is, a PRB index corresponding to PSFCH feedback is $\left((P_{\mathrm{ID}} + M_{ID})mod R_{\mathrm{PRB},\,CS}^{\mathrm{PSFCH}}\right) mod\left(R_{\mathrm{PRB},\,CS}^{\mathrm{PSFCH}}/(N_{\mathrm{CS}}^{\mathrm{PSFCH}} * N_{\mathrm{type}}^{\mathrm{PSFCH}})\right)$. In the PRB, a cyclic shift index corresponding to the PSFCH feedback is

$$\text{Cyclic Shift Pair Index} = \left\lfloor\left((P_{\mathrm{ID}} + M_{ID})mod R_{\mathrm{PRB},\,CS}^{\mathrm{PSFCH}}\right)/\left(R_{\mathrm{PRB},\,CS}^{\mathrm{PSFCH}}/(N_{\mathrm{CS}}^{\mathrm{PSFCH}} * N_{\mathrm{type}}^{\mathrm{PSFCH}})\right)\right\rfloor$$, and $m_0$ for

generating a PSFCH feedback sequence is determined according to Table 2 below.

Table 2: Value of $m_0$ corresponding to a PSFCH resource pair index in one PRB

| $N_{\mathrm{CS}}^{\mathrm{PSFCH}}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

It can be learned from the foregoing analysis that, due to different $M_{ID}$, for multicast 2, each user in the group uses a different PSFCH resource pair for feedback, and the transmitter device correspondingly receives each resource pair separately (the prerequisite is that $M_{ID}$ of each user in the group is known to all members in the group). For multicast 1, because $M_{ID} = 0$, for a PSSCH whose source address $P_{\mathrm{ID}}$ is determined, each member in the group uses a same PSFCH to feed back NACK information.

Link establishment process

SL communication devices need to first establish a link before exchanging data. That is, a purpose of link establishment is to serve a service at a higher application layer.

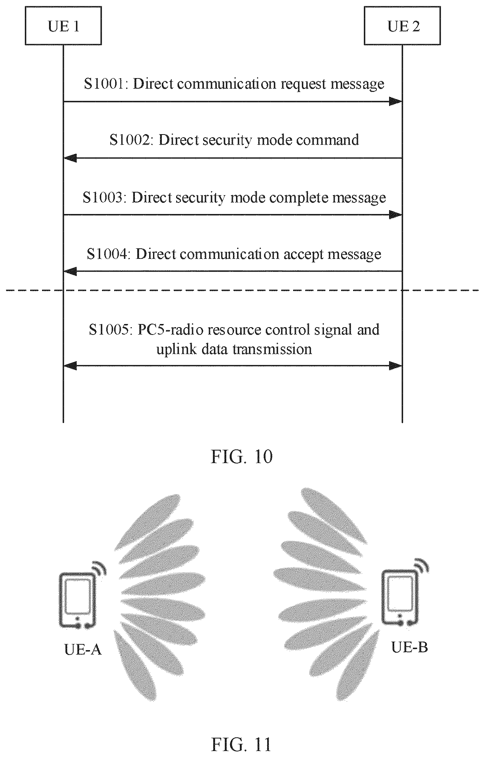

The following briefly describes a unicast link establishment process on a PC5 interface, which is specifically a layer-2 link establishment process. FIG. 10 is a simplified flowchart of layer-2 unicast link establishment according to an embodiment of this application. The procedure includes the following steps.

S1001: A transmitter device (UE 1) sends a direct communication request (direct communication request, DCR) message to a receiver device (UE 2), to initiate a unicast layer-2 link establishment procedure.

The DCR includes at least one of the following information:

source user information: an application layer identifier of the UE 1;
target user information: an application layer identifier of the UE 2;
V2X service information: V2X service type information for requesting to establish a layer-2 link; and
security information: information for establishing security.

S1002: After receiving the direct communication request message, the UE 2 sends a direct security mode command (direct security mode command) to the UE 1.

**In** a security establishment manner, if the DCR includes the ID of the UE 2, the UE 2 responds by establishing security with the UE 1.

**In** another security establishment manner, if the DCR does not include the ID of the UE 2, UE that is interested in using an announced V2X service type on a PC5 unicast link to the UE 1 responds by establishing security with the UE 1.

S1003: After receiving the direct security mode command, the UE 1 sends a direct security mode complete (direct security mode complete) message to the UE 2.

S1004: After receiving the direct security mode complete message, the UE 2 sends a direct communication accept (direct communication accept, DCA) message to the UE 1.

The UE 2 that successfully establishes security with UE 1 sends the DCA to the UE 1.

S1005: The UE 1 and the UE 2 perform PC5-radio resource control signal and uplink data transmission (PC5-RRC signalling and UP data transmission).

V2X service data is transmitted over an established unicast link.

An existing S-SSB design is merely for synchronization, and does not have a function of beam training. If an S-SSB outside an existing resource pool is used for beam training, a serious half-duplex problem exists. Using a subcarrier of 60 kHz as an example, there may be a maximum of 32 SSB transmission opportunities within 160 ms. Each UE sends an SSB on the opportunities, and no receiving UE receives the SSB. Therefore, beam training cannot be completed. FIG. 11 is a diagram of a half-duplex problem of S-SSB sweeping. When both UE-A and UE-B perform sending on an S-SSB opportunity, beam training cannot be implemented.

In NR, there is a one-to-one mapping relationship between an SSB and a physical random access channel (physical random access channel, PRACH), so that reception when corresponding UE feeds back an optimal beam is implemented at a position at which an SSB is sent, and it is avoided that a transmitter device does not know a specific time domain position for receiving a feedback from a receiver device. However, in an SL, there is no signal of a PRACH, that is, a relationship between an S-SSB or another signal for beam training and a feedback opportunity point cannot be constructed.

In view of this, an embodiment of this application provides a beam training solution. Beam training is performed by multiplexing a demodulation reference signal of a PSSCH or a PSCCH, so that beam training can be implemented, and signaling overheads are reduced.

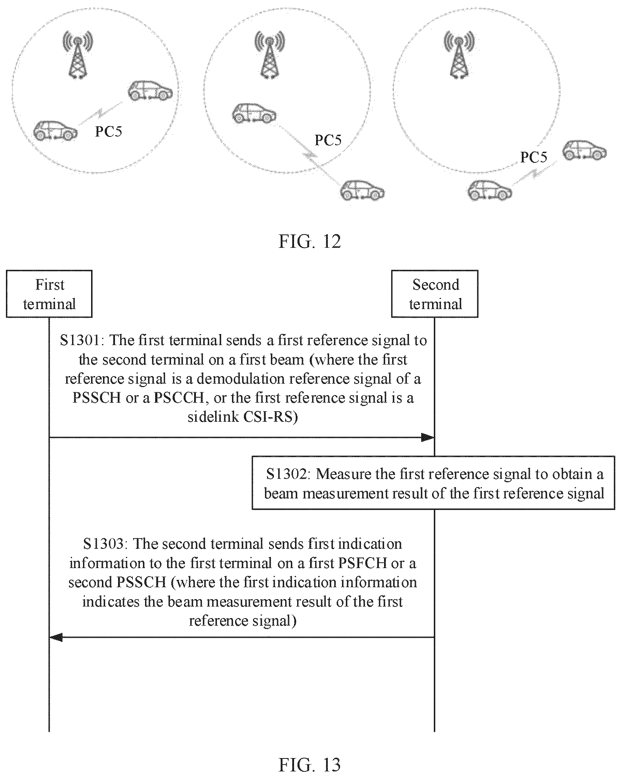

In embodiments of this application, FIG. 12 is a diagram of a relationship between a terminal and a network coverage area according to an embodiment of this application. Two terminals that perform sidelink communication (for example, V2X communication or D2D communication) in this application may both be located in a network coverage area (as shown in the left figure of FIG. 12). One of two terminals that perform sidelink communication may be located in a network coverage area, and the other terminal may be located outside the network coverage area (as shown in the middle figure of FIG. 12). Two terminals that perform sidelink communication may both be located outside a network coverage area (as shown in the right figure of FIG. 12).

FIG. 13 is a schematic flowchart of a beam training method according to an embodiment of this application. For example, the method may include the following steps.

S1301: A first terminal sends a first reference signal to a second terminal on a first beam.

This embodiment mainly relates to beam training in the foregoing P-1 phase, that is, training of a transmit coarse beam. In this embodiment, the first terminal is a transmitter device, and the second terminal is a receiver device. Both the first terminal and the second terminal may be located in a network coverage area; or both the first terminal and the second terminal may be located outside a network coverage area; or the first terminal is located in a network coverage area, and the second terminal is located outside the network coverage area; or the first terminal is located outside a network coverage area, and the second terminal is located in the network coverage area.

The first terminal respectively sends a plurality of first reference signals on a plurality of beams to perform beam training. In this embodiment, an example in which the first reference signal is sent on the first beam to perform beam training is used for description. The first beam is any one of a plurality of beams.

Different from an SSB used for beam training in 5G NR (in 5G NR, the SSB is not associated with a PSSCH or a PSCCH), in this embodiment, the first reference signal may be a demodulation reference signal of a first PSSCH, or the first reference signal may be a demodulation reference signal of a first PSCCH, or a sidelink channel state information-reference signal (channel state information-reference signal, CSI-RS).

For example, the first PSSCH is used to carry a direct communication request message. The direct communication request message is link establishment request information between the first terminal and the second terminal. The first reference signal and the direct communication request message are in a same time-frequency resource. For example, if a time domain granularity of the time-frequency resource is a slot, the first reference signal and the direct communication request message are in a same slot. A frequency domain granularity of the time-frequency resource may be a sub-channel. In an understanding manner, the first reference signal and the direct communication request message are carried on a same transport block (transport block, TB). The first reference signal is the demodulation reference signal of the first PSSCH, and the first reference signal is further used for beam training. To be specific, in this embodiment, the first reference signal used to demodulate the PSSCH is multiplexed for beam training, and the first terminal does not need to additionally send a reference signal for beam training, so that signaling overheads can be reduced. In addition, compared with directly using an S-SSB for beam training, this embodiment can effectively avoid a half-duplex problem.

Optionally, the first reference signal may alternatively be a phase tracking reference signal (PT-RS).

Further, the method may further include the following step: The first terminal sends SCI on the first beam, where the SCI indicates that the first PSSCH is used to carry the direct communication request message. The SCI indicates that the first PSSCH carries the direct communication request message. In this case, when receiving the SCI, the second terminal may receive the demodulation reference signal (namely, the first reference signal) of the first PSSCH and perform beam training.

Optionally, in the method, a sidelink channel state reference signal (CSI-RS) may alternatively be used as the first reference signal, and the sidelink state reference signal is used for beam training.

S1302: After receiving the first reference signal, the second terminal measures the first reference signal to obtain a beam measurement result of the first reference signal.

After receiving the first reference signal on the first beam, the second terminal measures the first reference signal to obtain the beam measurement result of the first reference signal. For a specific measurement manner, refer to an existing solution. Therefore, the second terminal measures the plurality of reference signals sent on the plurality of beams, to obtain beam measurement results of the plurality of reference signals. The beam measurement result may be reference signal received power (reference signal received power, RSRP), reference signal received quality (reference signal received quality, RSRQ), a received signal strength indicator (received signal strength indicator, RSSI), or the like. In this embodiment, an example in which the beam measurement result is the RSRP is used for description.

S1303: The second terminal sends first indication information to the first terminal on a first PSFCH or a second PSSCH channel.

The first indication information indicates the beam measurement result of the first reference signal.

Correspondingly, the first terminal receives the first indication information.

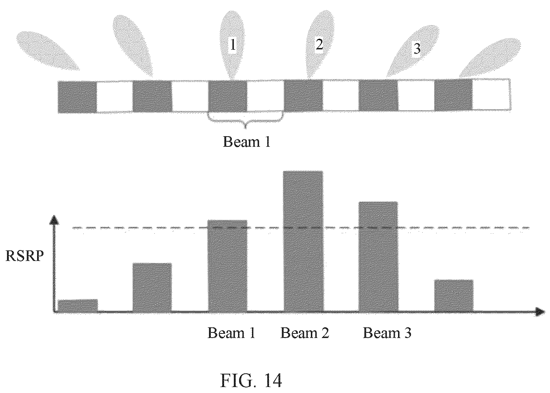

When the direct communication request message is sent by using the PSSCH, the first terminal needs to be enabled to receive a feedback at a corresponding position on a transmit beam. For example, in a beam training process shown in FIG. 14, the first terminal has six beams: 0 to 5. The first terminal sends direct communication request messages in a slot n to a slot n+5 by using the beam 0 to the beam 5 respectively. The second terminal receives reference signals on the beam 0 to the beam 5, and determines, by measuring RSRP of the reference signals received on the beam 0 to the beam 5, that a signal on the beam 2 is optimal. If feedback may be performed in a slot n+8, the second terminal sends the first indication information to the first terminal by using a receive beam. In this case, the first terminal needs to know that the second terminal performs feedback in the slot n+8, and receive the first indication information in the slot. In addition, the first terminal can effectively receive the first indication information only after receiving data on the transmit beam 2. Because the direct communication request message is carried in the PSSCH, and the PSSCH is in a resource pool, each PSSCH has a feedback opportunity corresponding to a PSFCH. In this embodiment, a feedback resource does not need to be indicated, and the PSFCH may be directly multiplexed. To be specific, after the first terminal selects a resource to send the direct communication request message on a beam (for example, the first beam), the first indication information may be sent on a corresponding PSFCH opportunity (for example, the first PSFCH). The first terminal receives the first indication information on the first beam.

However, if there are a plurality of beam resources in one PSFCH, the first terminal needs to receive information on a plurality of beams, which may not be implemented. To avoid that the first terminal needs to receive beam measurement results by using beams in two different directions on a same PSFCH, further, in this embodiment, the first terminal sends the first reference signal to the second terminal on only the first beam between two adjacent PSFCHs. Correspondingly, the second terminal receives the first reference signal from the first terminal on only the first beam between two adjacent PSFCHs.

Further, there is a unique correspondence between a resource used in a sending direction of the first beam and a time domain position of the first PSFCH. In this way, the first terminal does not need to receive beam measurement results by using beams in two different directions on a same PSFCH.

Optionally, when the first indication information is fed back by using a sidelink shared channel PSSCH, the first terminal may reserve a resource when sending the first reference signal, for the second terminal to send the sidelink shared channel. The second terminal sends the first indication information on the channel. The first indication information may be carried in sidelink channel state report information (CSI-RS Report). Specifically, the resource indication information is carried in sidelink control information (sidelink control information, SCI) and/or a medium access control-control element (medium access control-control element, MAC CE). Optionally, the SCI may include first-stage SCI and/or second-stage SCI.

In this embodiment, the PSFCH used to feed back the PSSCH is multiplexed. To be specific, when the PSSCH is fed back on the first PSFCH, the first indication information is also sent to the first terminal on the first PSFCH. The first indication information indicates the beam measurement result of the first reference signal. However, because a maximum of {2, 4, 6, 8, 12} pieces of information can be fed back in a cyclic shift code domain on a single RB of the PSFCH (a specific quantity of pieces of information that can be fed back depends on a configuration on a network side), an RSRP value obtained through measurement needs to be quantized. Quantization means that the beam measurement result is classified into a quantization interval. The second terminal may determine, based on an RSRP value corresponding to the first reference signal, that the RSRP value corresponding to the first reference signal corresponds to a first quantization interval, and determine, based on the first quantization interval, a cyclic shift code of the first PSFCH corresponding to the first quantization interval. In this case, the beam measurement result of the first reference signal includes quantization information for interval quantization on the RSRP. The quantization information is indicated by using a sequence corresponding to the cyclic shift code of the first PSFCH. A quantization interval to which the RSRP belongs corresponds to the cyclic shift code of the first PSFCH. For example, when the cyclic shift code domain on the single RB of the PSFCH can feed back 12 pieces of information, the RSRP may be quantized to 12 corresponding intervals. For example, an RSRP range is [-20, -80], one interval has 5 dBm, and RSRP actually obtained through measurement is equal to -68.45 dBm, and falls within a tenth quantization interval. In this case, a value of the cyclic shift code on the single RB of the PSFCH is 10, and a corresponding orthogonal sequence is correspondingly generated. For another example, when the cyclic shift code domain on the single RB can feed back six pieces of information, an RSRP range is [-20, -80], one interval has 10 dBm, and RSRP actually obtained through measurement is equal to -68.45 dBm, and falls within a fifth quantization interval. In this case, the cyclic shift code on the single RB of the PSFCH corresponds to a fifth orthogonal sequence.

In a possible implementation, different orthogonal sequences are numbered, and quantization intervals are numbered. Measurement results in a single quantization range correspond to orthogonal sequences with a same number. In other words, there is a one-to-one correspondence between a quantization interval and an orthogonal sequence.

In another possible implementation, when sending first reference signals to the second terminal on only different beams, the first terminal may select resources adjacent in time domain, but PSFCH feedback resources corresponding to the different beams cannot overlap in time domain. For example, the first terminal sends a reference signal on the first beam in a slot 2, and a corresponding PSFCH used to feed back a beam measurement result is in a slot 5. The first terminal sends a reference signal on a second beam in a slot 3, and a corresponding PSFCH used to feed back a beam measurement result is in a slot 7.

However, an existing cyclic shift code indicates feedback information (that is, ACK/NACK) of a PSSCH or feedback information of inter-user equipment coordination. FIG. 9 shows an example of a time-frequency resource position occupied by the feedback information of the PSSCH. For example, in a slot having a PSFCH transmission resource, if one sub-channel includes 10 PRBs and a resource pool has three sub-channels in total, a second bitmap indicating PSFCH frequency domain resources in the resource pool includes $3 \times 10 = 30$ bits in total to indicate whether each PRB can be used for PSFCH transmission. The second bitmap may indicate the foregoing HARQ-ACK resource, or may indicate a scheme2 conflict resource. In this embodiment, the PSFCH further indicates a beam measurement result. For differentiation, a bitmap for indication of a beam measurement result in FR2 is additionally introduced.

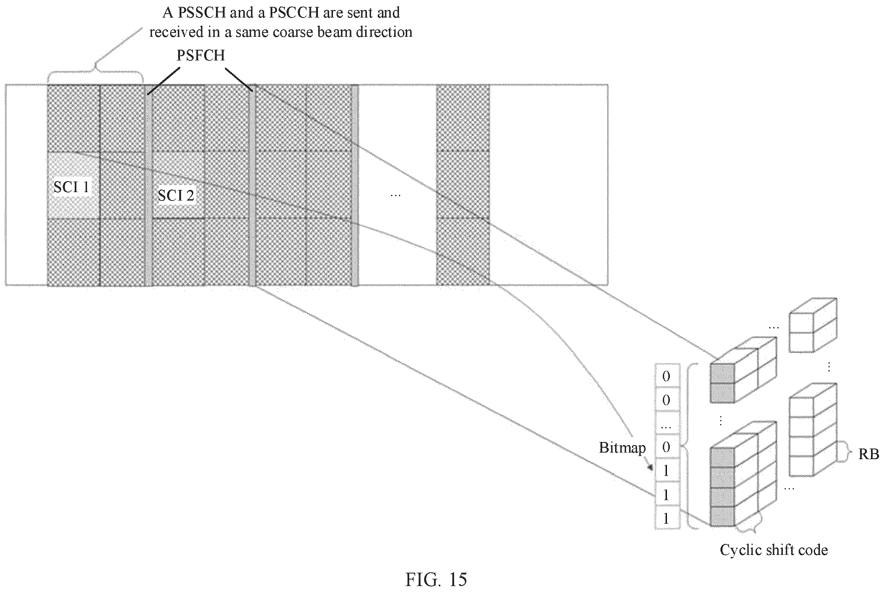

Further, the SCI further includes a first bitmap, and the first bitmap indicates a frequency domain position of a first resource that carries the first indication information. The frequency domain position of the first resource does not overlap a frequency domain position of at least one second resource, and the at least one second resource is used to carry feedback information of a PSSCH and/or feedback information of inter-user equipment coordination. FIG. 15 is a diagram of a resource for sending a beam measurement result by multiplexing a PSFCH according to an embodiment of this application. For each PSFCH feedback opportunity, a first bitmap indicates a frequency domain position of a first resource that carries one piece of first indication information. For example, in FIG. 15, the first bitmap indicates that RBs with RB index (RB index)=0, RB index=1, and RB index=2 are used to carry the first indication information. The first bitmap may be configured or preconfigured. In addition, a frequency domain position of the PSFCH may be configured by using radio resource control (radio resource control, RRC) signaling, that is, the first bitmap is configured by using RRC.

In addition, after the first terminal sweeps a plurality of beams on the first beam, if a plurality of second terminals need to send beam measurement results, the plurality of second terminals may send the beam measurement results at frequency domain positions of a plurality of first resources indicated by the first bitmap. To avoid a conflict, there is a unique mapping relationship between a terminal and a frequency domain position of a feedback resource. Further, the second terminal may determine, based on an identifier of the terminal, the frequency domain resource position corresponding to the first resource. In a possible implementation, the second terminal performs a modulo operation on a part of bandwidth by using the identifier of the second terminal (UE ID mod RB size), to determine the frequency domain resource position corresponding to the first resource.

However, the second terminal can send a beam measurement result of only one beam on a single PSFCH feedback opportunity. For example, the second terminal sends the first indication information to the first terminal on the first PSFCH, where the first indication information indicates the beam measurement result of the first reference signal. After the first terminal receives the beam measurement results (that is, a plurality of pieces of first indication information) of the plurality of beams, the first terminal may determine a candidate beam. Therefore, further, the method may further include the following step: The first terminal determines the second beam based on at least one piece of first indication information.

In a possible implementation, the second beam is a beam corresponding to a largest beam measurement result in beam measurement results corresponding to a plurality of beams. For example, the second beam may be an optimal beam, and the second beam is a beam corresponding to largest RSRP in a plurality of pieces of RSRP received by the first terminal.

In another possible implementation, the second beam is any beam in a candidate beam set, and a beam measurement result corresponding to a candidate beam in the candidate beam set is greater than or equal to a specified threshold. For example, the first terminal receives RSRP values corresponding to eight beams, where RSRP 1, RSRP 3, and RSRP 5 respectively corresponding to a beam 1, a beam 3, and a beam 5 are greater than or equal to the specified threshold. In this case, the first terminal may select an RSRP value from the RSRP 1, the RSRP 3, and the RSRP 5. A beam corresponding to the RSRP value is the second beam (which may be referred to as a candidate beam).

In addition, after sending the direct communication request message on the first beam, the first terminal respectively receives measurement results of a plurality of beams on a plurality of PSFCH feedback opportunities. However, after this process, the second terminal sends a direct communication accept message on the second beam. The direct communication accept message is a response message of the direct communication request message. In addition, the first terminal can receive the direct communication accept message on only the second beam, but the first terminal does not know a specific moment at which the second terminal sends the direct communication accept message.

Therefore, in a possible implementation, the SCI may further include second indication information, and the second indication information indicates a time window. The second terminal sends the direct communication accept message to the first terminal in the time window in a direction of the optimal beam.

Correspondingly, the first terminal receives the direct communication accept message from the second terminal in the time window in the direction of the optimal beam. For example, when sending the direct communication request message, the first terminal may indicate a time window by using the SCI, so that the second terminal sends the direct communication accept message in the time window, and the first terminal may wait for receiving the direct communication accept message on the second beam. After the time window expires, as a communication environment changes, the first terminal may switch to another beam for communication.

According to the beam training method provided in this embodiment of this application, beam training is performed by multiplexing a demodulation reference signal of a PSSCH or a PSCCH, so that beam training can be implemented, and signaling overheads are reduced. In addition, a PSFCH of the PSSCH may be multiplexed or the second PSSCH may be used to feed back the beam measurement result of the first reference signal, thereby avoiding introducing an additional feedback resource and simplifying a communication design.

In the foregoing embodiment, beam training is performed by multiplexing a demodulation reference signal of a PSSCH or a PSCCH, and the beam measurement result of the first reference signal is fed back by multiplexing a PSFCH of the PSSCH. In the following embodiment, beam training is performed by multiplexing a demodulation reference signal of a PSSCH or a PSCCH, and a beam measurement result is fed back by reserving a beam feedback resource.

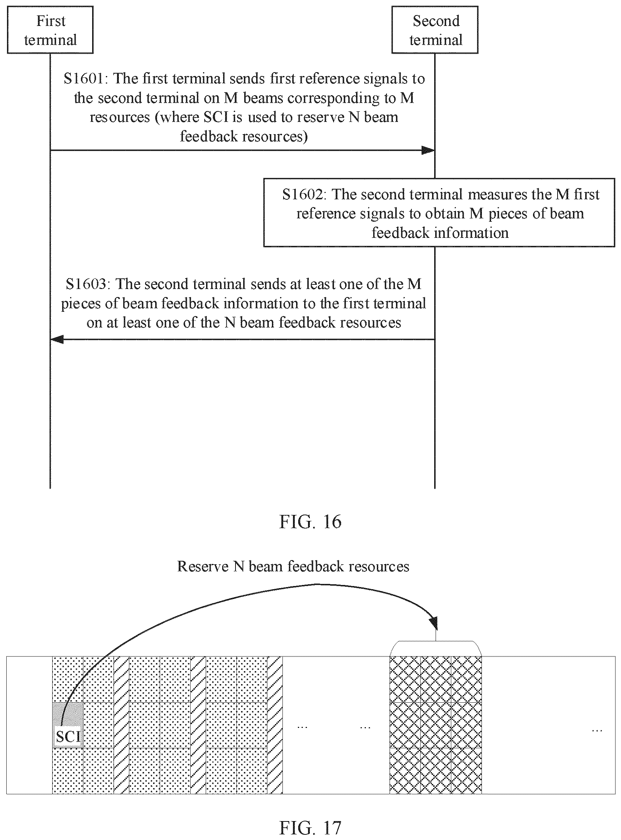

FIG. 16 is a schematic flowchart of another beam training method according to an embodiment of this application. The method may include the following steps.

S1601: A first terminal sends first reference signals to a second terminal on M beams corresponding to M resources.

This embodiment mainly relates to beam training in the foregoing P-1 phase, that is, training of a transmit coarse beam. In this embodiment, the first terminal is a transmitter device, and the second terminal is a receiver device. Both the first terminal and the second terminal may be located in a network coverage area; or both the first terminal and the second terminal may be located outside a network coverage area; or the first terminal is located in a network coverage area, and the second terminal is located outside the network coverage area; or the first terminal is located outside a network coverage area, and the second terminal is located in the network coverage area.

The first terminal sends the first reference signals to the second terminal on the M beams corresponding to the M resources, to perform beam training. M is a positive integer.

Different from an SSB used for beam training in 5G NR (in 5G NR, the SSB is not associated with a PSSCH or a PSCCH), in this embodiment, the first reference signal may be a demodulation reference signal of a PSSCH.

For example, the PSSCH is used to carry a direct communication request message. The direct communication request message is used to trigger a link establishment procedure between the first terminal and the second terminal. The first reference signal and the direct communication request message are in a same time-frequency resource. For example, if a time domain granularity of the time-frequency resource is a slot, the first reference signal and the direct communication request message are in a same slot. A frequency domain granularity of the time-frequency resource may be a sub-channel. The first reference signal is the demodulation reference signal of the PSSCH, and the first reference signal is further used for beam training. To be specific, in this embodiment, the first reference signal used to demodulate the PSSCH is multiplexed for beam training, and the first terminal does not need to additionally send a reference signal, so that signaling overheads can be reduced. In addition, compared with directly using an S-SSB for beam training, this embodiment can effectively avoid a half-duplex problem.

Alternatively, in this embodiment, the first reference signal may be a demodulation reference signal of a PSCCH. The PSCCH is used to carry SCI.

Alternatively, in this embodiment, the first reference signal may be a sidelink channel state reference signal (CSI-RS).

Alternatively, in this embodiment, the first reference signal may be a phase tracking reference signal (PT-RS).

Further, the SCI further includes first indication information. The first indication information indicates that the PSSCH carries the direct communication request message. The SCI indicates that the PSSCH carries the direct communication request message. In this case, when receiving the SCI, the second terminal may receive the demodulation reference signal (namely, the first reference signal) of the PSSCH and perform beam training.

All beams of FR2 are directional. If the first terminal communicates with the second terminal by using a beam 1, the first terminal performs beam sensing and resource selection on the beam 1, and then notifies the second terminal, so that the second terminal performs feedback on the resource. This is the most effective solution to avoid a resource collision. Therefore, in this embodiment, in a beam sweeping process, when sending a PSSCH by using a resource, the first terminal reserves a resource on a corresponding beam, and the resource is used to feed back a beam measurement result of the beam.

For example, FIG. 17 is a diagram of reserving a beam feedback resource according to an embodiment of this application. The SCI is used to reserve N beam feedback resources, and the N beam feedback resources are used to feed back beam measurement results of the M beams. To be specific, when performing beam sweeping on a beam, the first terminal may also select a resource in a direction of the beam, and reserve a time-frequency resource as a beam feedback resource. In an example, the N beam feedback resources and M beam feedback resources used to feed back the beam measurement results of the M beams may be at a same granularity, for example, both are at a symbol granularity, that is, N=M. In another example, the N beam feedback resources and M beam feedback resources used to feed back the beam measurement results of the M beams may be at different granularities. For example, the N beam feedback resources are at a slot granularity, and the M beam feedback resources are at a symbol granularity, that is, N<M. The N beam feedback resources do not overlap in time domain. N is a positive integer.

In the SCI, a plurality of consecutive time domain resources may be reserved as beam feedback resources. In other words, at least two slots in which the N reserved beam feedback resources are located are consecutive in time domain. In this way, a feedback delay can be reduced, and the second terminal may feed back beam measurement results on the plurality of consecutive beam feedback resources in a centralized manner.

Optionally, a plurality of consecutive time domain resources are reserved within a specific time threshold as beam feedback resources, that is, a difference between a slot in which a first beam feedback resource in the N beam feedback resources is located and a slot in which an $N^{th}$ beam feedback resource in the N beam feedback resources is located is within a first threshold range. In this way, a feedback delay can also be reduced, and the second terminal may feed back beam measurement results on the plurality of consecutive beam feedback resources in a centralized manner.

In addition, in the resource pool, the SCI may further indicate that priorities of the N reserved beam feedback resources are the highest, that is, indicate that a reservation priority of the feedback resource is Priority=1. This avoids that the N beam feedback resources are used for other purposes, and cannot reliably feed back a beam measurement result.

Further, the SCI may further include indication information, and the indication information indicates that the N beam feedback resources are used for beam measurement result feedback, so as to avoid that the N beam feedback resources are used for other purposes, and cannot reliably feed back a beam measurement result.

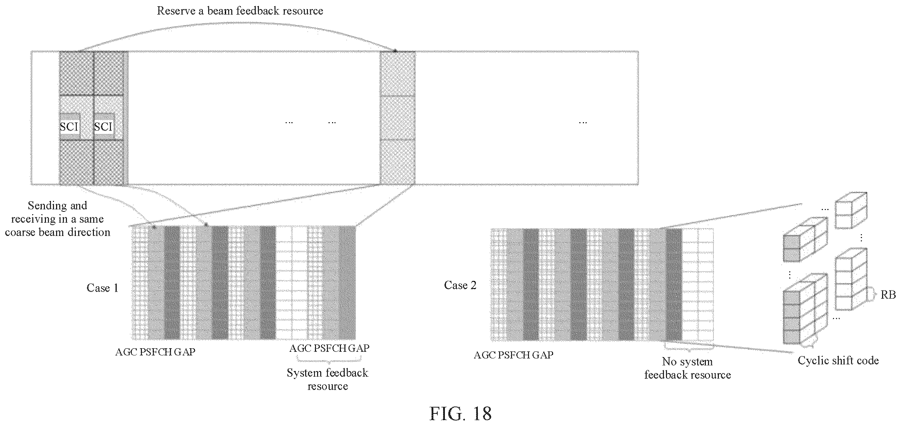

For N different sweeping beam directions of the first terminal, to effectively receive a feedback, beam measurement results need to be received on different beams, so as to determine an optimal beam. Therefore, each beam needs to correspond to a beam feedback resource. An existing PSFCH includes an AGC and a GAP. Therefore, a single beam feedback resource needs three symbols in total. One slot includes 14 symbols, and may include a maximum of four beam feedback resources. In some slots, system feedback resources may further exist. In this case, 11 symbols are left after system feedback symbols are removed, and a maximum of three beam feedback resources may be included. A design of a beam feedback resource that may be included in a slot may be shown in FIG. 18 based on whether there is a system feedback resource.

Case 1: As shown in FIG. 18, the slot includes a system feedback resource, and the remaining 11 symbols may be divided into three beam feedback resources.

Case 2: As shown in FIG. 18, the slot does not include a system feedback resource, and the 14 symbols may be divided into four beam feedback resources.

For this case, there are the following several implementations: In an implementation, the first terminal may reserve a time-frequency resource without a system feedback resource. In another implementation, all slots are divided based on three beam feedback resources, and whether there is a system feedback resource is not distinguished. This simplifies a communication design.

Further, the N beam feedback resources may be at a symbol granularity. The SCI further includes third indication information. The third indication information indicates time domain positions of the N beam feedback resources. The time domain positions of the N beam feedback resources that are indicated by the third indication information may be at a symbol granularity. For example, the time domain position of the beam feedback resource includes an absolute symbol position or a slot position, or the time domain position of the beam feedback resource includes a slot position and a relative symbol position in a slot.

As described above, the N beam feedback resources may be at a slot granularity, and a resource actually used to feed back a beam measurement result may be at a symbol granularity. In this case, the N beam feedback resources may be divided into M feedback opportunities in time domain. Specifically, there may be the following several implementations.

In a possible implementation, the N beam feedback resources correspond to $\lceil M/X \rceil$ slots, $\lceil \ \rceil$ represents rounding up, and X beam feedback resources corresponding to X beam directions are located in a same slot. For example, M=8, N=3, and three beam feedback resources correspond to three slots. A same slot is reserved on beams 0 to 2 to feed back beam measurement results, a same slot is reserved on beams 3 to 5 to feed back beam measurement results, and a same slot is reserved on beams 6 and 7 to feed back beam measurement results. In this way, signaling overheads for reservation can be reduced, and a communication design can be simplified.

In another possible implementation, $N = \lceil M/X \rceil$. For example, M=8, N=3, and three beam feedback resources correspond to three slots. A slot 1 is reserved on a beam 1 to feed back a beam measurement result, a slot 2 is reserved on a beam 4 to feed back a beam measurement result, and a slot 3 is reserved on a beam 7 to feed back a beam measurement result. The slot 1 and the slot 2 each include three beam feedback resources, and the slot 3 includes two beam feedback resources. In this case, beam measurement results on beams 0 to 2 are fed back on three beam feedback resources in the slot 1, beam measurement results on beams 3 to 5 are fed back on three beam feedback resources in the slot 2, and beam measurement results on beams 6 and 7 are fed back on two beam feedback resources in the slot 3. In this way, signaling overheads for reservation can be reduced, and a communication design can be simplified.

In another possible implementation, for each beam, a slot resource may be reserved in a direction in which the beam is located to feed back a beam measurement result, that is, M is equal to N.

S1602: After receiving the first reference signals on the M beams corresponding to the M resources, the second terminal measures the M first reference signals, to obtain M pieces of beam feedback information.

After receiving the first reference signals on the M beams, the second terminal measures the M first reference signals to obtain the M pieces of beam feedback information, where the M pieces of beam feedback information respectively indicate beam measurement results of the M first reference signals. For a specific measurement manner, refer to an existing solution. The beam measurement result may be RSRP, RSRQ, or the like. In this embodiment, an example in which the beam measurement result is the RSRP is used for description.

S1603: The second terminal sends at least one of the M pieces of beam feedback information to the first terminal on at least one of the N beam feedback resources.

Correspondingly, the first terminal receives the at least one piece of beam feedback information on the at least one of the N beam feedback resources.

After obtaining the N pieces of beam feedback information, the second terminal may send at least one of the M pieces of beam feedback information to the first terminal.

In an example, the second terminal sends one piece of beam feedback information to the first terminal, where the beam feedback information indicates a largest RSRS value in M RSRP values. That is, after the first terminal sweeps all beam directions, the second terminal may perform feedback on a beam feedback resource corresponding to an optimal beam sending direction.

In a possible implementation, the second terminal sends only one signal on the optimal beam, and the first terminal receives information on a feedback resource corresponding to the beam. Therefore, the determined beam is the optimal beam.

In another possible implementation, the second terminal feeds back information on each beam, and carries specific beam sidelink information, including RSRP information.

The optimal beam is a beam that can be used for subsequent data or signal transmission and that is determined by the second terminal device based on M pieces of or less than M pieces of RSRP, and the beam is fed back to the first terminal.

In another example, the second terminal sends a plurality of pieces of beam feedback information to the first terminal. The plurality of pieces of beam feedback information indicate a plurality of RSRP values that are in M RSRP values and that are greater than or equal to a specified threshold.

In addition, after the first terminal sweeps a plurality of beams on the first beam, if a plurality of second terminals need to send beam measurement results, the plurality of second terminals may send the beam measurement results at frequency domain positions of a plurality of first resources indicated by the first bitmap. To avoid a conflict, there may be a unique correspondence between the second terminal and a frequency domain resource in a feedback position. Further, the second terminal may determine, based on an identifier of the terminal, the frequency domain resource position corresponding to the first resource. For example, the second terminal performs a modulo operation on a part of bandwidth by using the identifier of the second terminal (UE ID mod RB size), to determine the frequency domain resource position corresponding to the first resource.

In addition, after sending the direct communication request message on the first beam, the first terminal respectively receives measurement results of a plurality of beams on a plurality of PSFCH feedback opportunities. However, after this process, the second terminal sends a direct communication accept message on the second beam. The direct communication accept message is a response message of the direct communication request message. In addition, the first terminal can receive the direct communication accept message on only the second beam, but the first terminal does not know a specific moment at which the second terminal sends the direct communication accept message. Therefore, further, the SCI may further include second indication information, and the second indication information indicates a time window. The second terminal sends the direct communication accept message to the first terminal in the time window in a direction of the optimal beam. Correspondingly, the first terminal receives the direct communication accept message from the second terminal in the time window in the direction of the optimal beam. For example, when sending the direct communication request message, the first terminal may indicate a time window by using the SCI, so that the second terminal sends the direct communication accept message in the time window, and the first terminal may wait for receiving the direct communication accept message on the second beam. After the time window expires, as a communication environment changes, the first terminal may switch to another beam for communication.

According to the beam training method provided in this embodiment of this application, beam training is performed by multiplexing a demodulation reference signal of a PSSCH or a PSCCH, so that beam training can be implemented, and signaling overheads are reduced. In addition, the N beam feedback resources are reserved, so that after the first terminal sweeps all beams, the second terminal can perform centralized feedback on at least one beam feedback resource. This accelerates a beam training process and simplifies a communication design, and the first terminal waits for receiving beam feedback information in a corresponding beam direction, so that blind reception of the first terminal can be avoided.

The foregoing embodiment describes a coarse beam training process. In the following embodiment, fine beam training is further completed while coarse beam training is implemented.

In another embodiment, beam training in a P-1 phase (a coarse beam sweeping phase) and a P-2 phase (a fine beam sweeping phase) is further included. Existing fine beam sweeping is implemented by sweeping a CSI-RS. For an SL, the CSI-RS may alternatively be used for fine beam alignment.

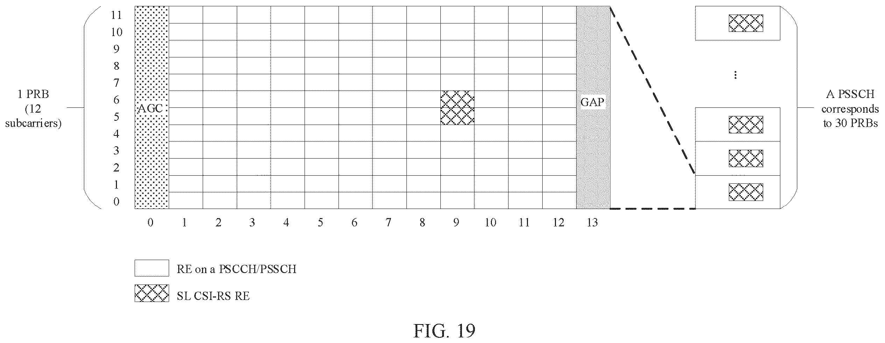

As described above, the first terminal may multiplex the PSSCH or the PSCCH to perform beam training. A slot resource used to carry data naturally includes a CSI-RS signal. However, as shown in FIG. 19 that is a diagram of a structure of a CSI-RS resource in a current SL, a CSI-RS signal in the current SL is included in only some resource element (resource element, RE) resources (for example, an RE 5 and an RE 6) in one symbol (for example, a symbol 9 in the figure). In this case, time domain resource positions used for fine beam training are insufficient. A specific position of a CSI-RS resource in a slot is configured by using a parameter.

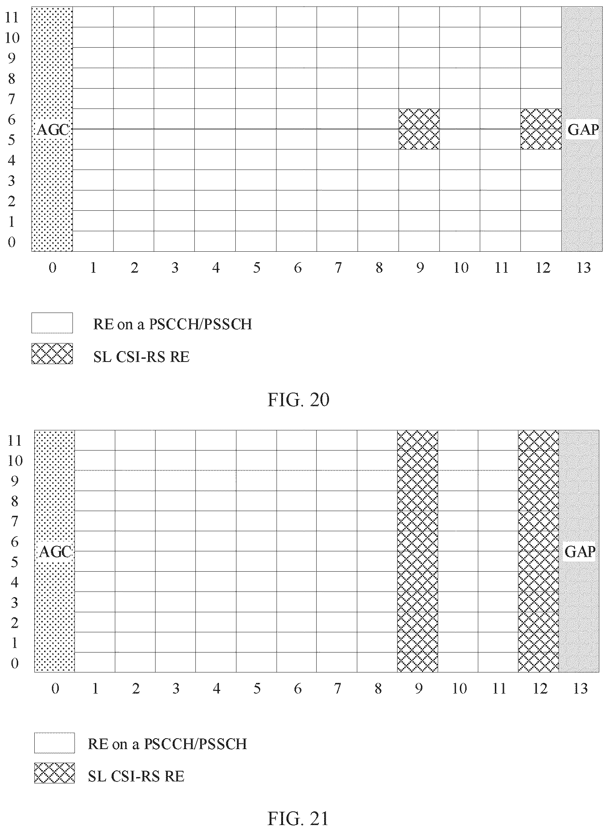

In an implementation, FIG. 20 is a diagram of a structure of a CSI-RS resource in an SL according to an embodiment of this application. An additional CSI-RS resource position is added to a current slot structure. For example, in addition to a plurality of currently configured REs in a single symbol used for a CSI-RS, a CSI-RS opportunity may be added to an additional symbol. For example, an additional CSI-RS resource is added to a symbol whose index is 12. The resource may be consistent with a resource on an index=9. In addition, UE initially sends data on the two symbols by using a fine beam. A specific quantity of CSI-RS slots to be configured may be determined based on a quantity of fine beams included in a single coarse beam, and the value may be configured.

However, for a resource configuration of the CSI-RS shown in FIG. 20, a possible risk is that when the first terminal sends the CSI-RS and the data on the symbols whose indexes are 9 and 12 by using a fine beam, because a fine beam is not an optimal beam, or when a coarse beam is used for sending, the second terminal can perform reception and decoding, but when the beam is switched to a fine beam, only one fine beam can be used for decoding. For this problem, the following solution is considered. FIG. 21 is a diagram of a structure of a CSI-RS resource in another SL according to an embodiment of this application. All frequency domain resources on an entire symbol are used to send a CSI-RS, and do not carry any data information. A specific quantity of symbol resources to be configured depends on a quantity of fine beams in a coarse beam. In addition, for this special structure, the slot structure may be indicated in SCI in a slot resource, so that responding UE-B can identify the resource structure and perform decoding smoothly.

The first reference signal is a demodulation reference signal of a PSSCH or a PSCCH. The second reference signal is a CSI-RS.

The PSCCH is used to carry SCI. The SCI indicates a time-frequency resource position of a second reference signal sent on at least one first beam.

For feedback of a fine beam sweeping result, if a coarse beam sweeping result includes first quantization information for interval quantization on RSRP, a cyclic shift code of the first PSFCH is 12 bits, and the first quantization information is indicated by using a sequence corresponding to first 10 bits of the cyclic shift code of the first PSFCH, the fine beam sweeping result includes second quantization information for interval quantization on the RSRP, and the second quantization information is indicated by using a sequence corresponding to last two bits of the cyclic shift code of the first PSFCH.

In addition, if the coarse beam sweeping result is fed back by using a reserved resource, the fine beam sweeping result includes quantization information for interval quantization on the RSRP, and the quantization information is indicated by using a sequence corresponding to the cyclic shift code of the first PSFCH.

The foregoing embodiment describes a beam training process. In the following embodiment, after beam training is implemented, a direction of a transmit beam may be further dynamically indicated at a transmitter.

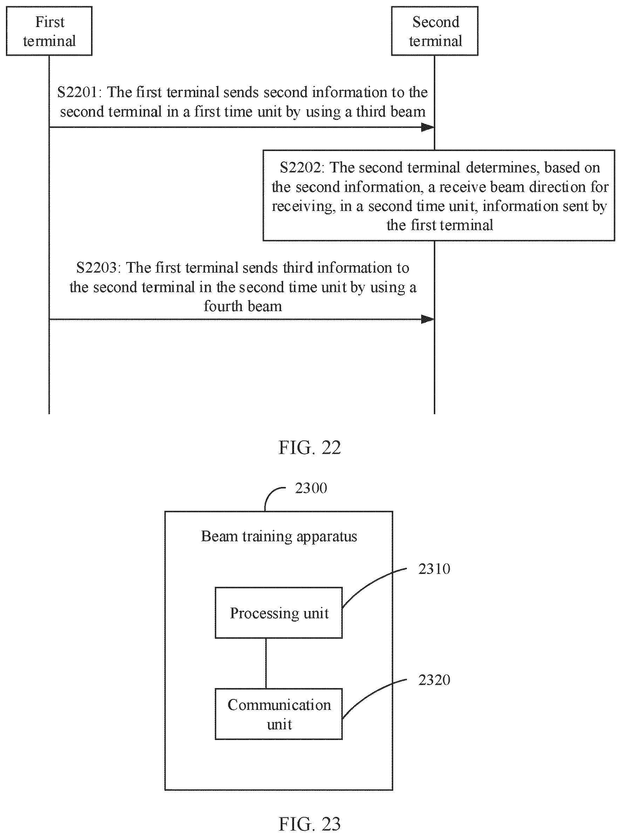

FIG. 22 is a schematic flowchart of another communication method according to an embodiment of this application. For example, the method may include the following steps.

S2201: A first terminal sends second information to a second terminal in a first time unit by using a third beam.

The second information indicates that the first terminal is to send third information in a second time unit by using a fourth beam.

The third information is information carried on a PSSCH and/or a PSCCH.

The second time unit is after the first time unit.

Different from an existing technical solution in which a terminal sends data on a single beam and does not perform beam switching, in this embodiment, a sending terminal may indicate, in a time unit, that a beam is switched in a subsequent time unit, and dynamically maintain a relatively good beam pair for sending data.

Optionally, after completing beam training, the first terminal sends beam data or information to the second terminal in the first time unit in a direction of the third beam. Because of a channel change, the first terminal determines that the fourth beam may also be used to send information, or a channel of the fourth beam is better and is more suitable for transmitting data and information. In this case, the first terminal may indicate, in the first time unit, that the first terminal is to send information by using the fourth beam in the second time unit after the first time unit.

Specifically, a granularity for indicating beam direction switching may be a granularity of a sidelink channel. For example, it may indicate that the fourth beam is used to send information on a sidelink shared channel or a sidelink control channel in the second time unit, or it may indicate that the fourth beam is used to send information on a sidelink shared channel and a sidelink control channel in the second time unit.

Optionally, the granularity for indicating beam direction switching may alternatively be a granularity of a symbol. For example, first three symbols in a slot n are switched to a beam 3 for sending, and last 11 symbols are switched to a beam 4 for sending.

In this method, a switched beam is dynamically indicated, to ensure that data and information are transmitted on a beam with relatively good channel quality, maintain a stable beam pair, and reduce data retransmission.

The second information is carried by a sidelink control information PSCCH.

The second information indicates, optionally by using a field in the SCI, that beam information is carried on a sidelink control channel PSCCH. Specifically, the beam information may be carried in first-stage SCI or second-stage SCI.

Specifically, the second information may be beam index (Index) information.

The fourth beam is adjacent to the third beam.

In the first time unit, the first terminal determines to use the first beam to send information or data, and uses the fourth beam to send information in the second time unit after the first time unit. To ensure that the sent data can be received by the second terminal, a relatively good implementation is to switch to an adjacent beam to send the information, that is, the fourth beam is an adjacent beam of the third beam. Adjacent beams are two beams that are actually adjacent to each other, or beams whose beam indexes differ by 1.

S2202: The second terminal determines, based on the second information, a receive beam direction for receiving, in the second time unit, information sent by the first terminal.

Because a plurality of groups of beam pairs have been trained in a beam training process, when the second terminal receives the beam information sent by the first terminal device in the first time unit, the second terminal receives data or information in the second time unit by using a beam corresponding to a switched beam. For example, if a beam indicated by the first terminal and received by the second terminal in a slot 1 is a beam 3, and it is determined, by using a beam pair in beam training, that a receive beam direction corresponding to the beam 3 is a beam 5 of the second terminal device, the second terminal receives, after the slot 1 or in a subsequent slot 4 by using the beam 5, data or information sent by the first terminal.

Optionally, the second terminal receives the information or the data on a fifth beam in the first time unit, and the second terminal determines, based on the second information, to receive the data or the information on a sixth beam in the second time unit.

Optionally, both the fifth beam and the sixth beam are receive beams of the second terminal.

Optionally, there is a one-to-one correspondence between the fifth beam and the third beam, and there is a one-to-one correspondence between the sixth beam and the fourth beam.

Optionally, for sending information or data by the first terminal to the second terminal, there may be a plurality of groups of one-to-one correspondences between a plurality of transmit beams of the first terminal and a plurality of receive beams of the second terminal.

Optionally, the plurality of groups of one-to-one correspondences are determined by the first terminal and the second terminal in a beam training process. Optionally, the second terminal determines, based on the plurality of groups of one-to-one correspondences between beams and the received second information, a direction of the sixth beam used to receive information or data in the second time unit.

S2203: The first terminal sends the third information to the second terminal in the second time unit by using the fourth beam.

After indicating the switched beam direction, the first terminal sends information to the second terminal by using the indicated fourth beam after the first time unit or in the second time unit after the first time unit.

It may be understood that, to implement functions in the foregoing embodiments, the network elements include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

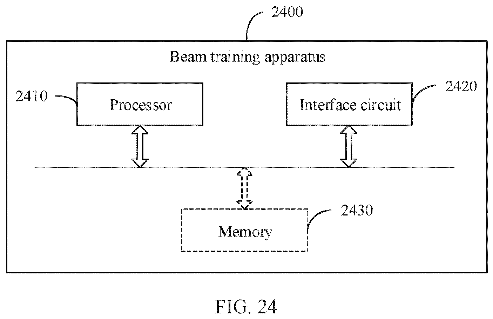

FIG. 23 and FIG. 24 are diagrams of possible structures of beam training apparatuses according to an embodiment of this application. The beam training apparatuses may be configured to implement functions of the network elements in the foregoing method embodiments. Therefore, beneficial effects of the foregoing method embodiments can also be achieved. In embodiments of this application, the beam training apparatus may be one of the terminals 120a to 120j shown in FIG. 1, or may be a module (for example, a chip) used in the terminal.

As shown in FIG. 23, a beam training apparatus 2300 includes a processing unit 2310 and a communication unit 2320. The beam training apparatus 2300 is configured to implement the function of the first terminal or the second terminal in the method embodiment shown in FIG. 13 or FIG. 16.

When the beam training apparatus 2300 is configured to implement the function of the first terminal in the method embodiment shown in FIG. 13, the communication unit 2320 is configured to perform the operations performed by the first terminal in steps S1301 and S1303 in the embodiment shown in FIG. 13.

When the beam training apparatus 2300 is configured to implement the function of the second terminal in the method embodiment shown in FIG. 13, the communication unit 2320 is configured to perform the operations performed by the second terminal in steps S1301 and S1303 in the embodiment shown in FIG. 13, and the processing unit 2310 is configured to perform step S1302 in the embodiment shown in FIG. 13.

When the beam training apparatus 2300 is configured to implement the function of the first terminal in the method embodiment shown in FIG. 16, the communication unit 2320 is configured to perform the operations performed by the first terminal in steps S1601 and S1603 in the embodiment shown in FIG. 16.

When the beam training apparatus 2300 is configured to implement the function of the second terminal in the method embodiment shown in FIG. 16, the communication unit 2320 is configured to perform the operations performed by the second terminal in steps S1601 and S1603 in the embodiment shown in FIG. 16, and the processing unit 2310 is configured to perform step S1602 in the embodiment shown in FIG. 16.

For more detailed descriptions of the processing unit 2310 and the communication unit 2320, directly refer to related descriptions in the method embodiment shown in FIG. 13 or FIG. 16. Details are not described herein again.

As shown in FIG. 24, a beam training apparatus 2400 includes a processor 2410 and an interface circuit 2420. The processor 2410 and the interface circuit 2420 are coupled to each other. It may be understood that the interface circuit 2420 may be a transceiver or an input/output interface. Optionally, the beam training apparatus 2400 may further include a memory 2430, configured to: store instructions executed by the processor 2410, or store input data required for running instructions by the processor 2410, or store data generated after the processor 2410 runs instructions.

When the beam training apparatus 2400 is configured to implement the method shown in FIG. 13 or FIG. 16, the processor 2410 is configured to implement the function of the processing unit 2310, and the interface circuit 2420 is configured to implement the function of the communication unit 2320.

When the beam training apparatus is a chip used in a first terminal, the chip in the first terminal implements a function of the first terminal in the foregoing method embodiments. The chip in the first terminal receives information from another module (for example, a radio frequency module or an antenna) in the first terminal, where the information is sent by a second terminal to the first terminal. Alternatively, the chip in the first terminal sends information to another module (for example, a radio frequency module or an antenna) in the first terminal, where the information is sent by the first terminal to a second terminal.

When the beam training apparatus is a chip used in a second terminal, the chip in the second terminal implements a function of the second terminal in the foregoing method embodiments. The chip in the second terminal receives information from another module (for example, a radio frequency module or an antenna) in the second terminal, where the information is sent by a first terminal to the second terminal. Alternatively, the chip in the second terminal sends information to another module (for example, a radio frequency module or an antenna) in the second terminal, where the information is sent by the second terminal to a first terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. An example storage medium is coupled to a processor, so that the processor can read information from the storage medium and can write information into the storage medium. Certainly, the storage medium may alternatively be a part of the processor. The processor and the storage medium may be located in an ASIC. In addition, the ASIC may be located in a network device or a terminal. Certainly, the processor and the storage medium may exist in the network device or the terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device such as a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. "At least one of the following: ..." or a similar expression represents any one of listed items or any quantity of combinations of these items. For example, "at least one of the following: A, B, and C" or "at least one of the following: A, B, or C" each may indicate that only A exists, only B exists, only C exists, both A and B exist, both B and C exist, both A and C exist, or A, B, and C all exist, where A, B, and C may be singular or plural. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

**Claims**

1. A beam training method, wherein the method comprises:

    sending, by a first terminal, a first reference signal to a second terminal on a first beam, wherein the first reference signal is a demodulation reference signal of a first physical sidelink shared channel PSSCH or a first physical sidelink control channel PSCCH, or the first reference signal is a sidelink channel state reference signal; and
    receiving, by the first terminal, first indication information from the second terminal on a first physical sidelink feedback channel PSFCH or a second PSSCH, wherein the first indication information indicates a beam measurement result of the first reference signal.

2. The method according to claim 1, wherein sending, by the first terminal, the first reference signal to the second terminal on the first beam comprises:
    sending, by the first terminal, the first reference signal to the second terminal on only the first beam between two adjacent PSFCHs.

3. The method according to claim 1 or 2, wherein the method further comprises:

determining, by the first terminal, a second beam based on at least one piece of first indication information, wherein
the second beam is a beam corresponding to a largest beam measurement result in beam measurement results corresponding to a plurality of beams; or
the second beam is any beam in a candidate beam set, and a beam measurement result corresponding to a candidate beam in the candidate beam set is greater than or equal to a specified threshold.

4. The method according to claim 3, wherein the PSCCH is used to carry sidelink control information, the sidelink control information further comprises second indication information, the second indication information indicates a time window, and the method further comprises:
receiving, by the first terminal, direct communication accept information from the second terminal in the time window in a direction of the second beam.

5. A beam training method, wherein the method comprises:

receiving, by a second terminal, a first reference signal from a first terminal on a first beam, wherein the first reference signal is a demodulation reference signal of a first physical sidelink shared channel PSSCH or a first physical sidelink control channel PSCCH, or the first reference signal is a sidelink channel state reference signal;
measuring, by the second terminal, the first reference signal to obtain a beam measurement result of the first reference signal; and
sending, by the second terminal, first indication information to the first terminal on a first physical sidelink feedback channel PSFCH or a second PSSCH, wherein the first indication information indicates the beam measurement result of the first reference signal.

6. The method according to claim 5, wherein receiving, by the second terminal, the first reference signal from the first terminal on the first beam comprises:
receiving, by the second terminal, the first reference signal from the first terminal on only the first beam between two adjacent PSFCHs.

7. The method according to claim 5 or 6, wherein the PSCCH is used to carry sidelink control information, the sidelink control information further comprises second indication information, the second indication information indicates a time window, and the method further comprises:

sending, by the second terminal, direct communication receive information to the first terminal in the time window in a direction of a second beam, wherein
the second beam is a beam corresponding to a largest beam measurement result in beam measurement results corresponding to a plurality of beams; or
the second beam is any beam in a candidate beam set, and a beam measurement result corresponding to a candidate beam in the candidate beam set is greater than or equal to a specified threshold.

8. The method according to any one of claims 1 to 7, wherein there is a unique correspondence between a resource used in a sending direction of the first beam and a time domain position of the first PSFCH; and
the first reference signal is in one-to-one correspondence with the first PSFCH.

9. The method according to any one of claims 1 to 8, wherein the PSSCH is used to carry a direct communication request message, and the first reference signal and the direct communication request message are in a same time unit.

10. The method according to any one of claims 1 to 9, wherein the beam measurement result of the first reference signal comprises quantization information for interval quantization on reference signal received power RSRP;

the quantization information is indicated by using a sequence corresponding to a cyclic shift code of the first PSFCH; and
a quantization interval to which the RSRP belongs is in one-to-one correspondence with the cyclic shift code of the first PSFCH.

11. A beam training method, wherein the method comprises:

sending, by a first terminal, first reference signals to a second terminal on M beams corresponding to M resources, wherein the first reference signal is a demodulation reference signal of a physical sidelink shared channel PSSCH or a physical sidelink control channel PSCCH, the PSCCH is used to carry sidelink control information, the sidelink control information is used to reserve N beam feedback resources, the N beam feedback resources are used to feed back beam measurement results of the M beams, the N beam feedback resources do not overlap in time domain, and both M and N are positive integers; and

respectively receiving, by the first terminal, at least one of the M pieces of beam feedback information from the second terminal on at least one of the N beam feedback resources, wherein the at least one piece of beam feedback information indicates a beam measurement result of at least one first reference signal.

12. The method according to claim 11, wherein the sidelink control information further comprises second indication information, the second indication information indicates a time window, and the method further comprises:

receiving, by the first terminal, direct communication receive information from the second terminal in the time window in a direction of a second beam, wherein

the second beam is a beam corresponding to a largest beam measurement result in beam measurement results corresponding to a plurality of beams; or

the second beam is any beam in a candidate beam set, and a beam measurement result corresponding to a candidate beam in the candidate beam set is greater than or equal to a specified threshold.

13. A beam training method, wherein the method comprises:

receiving, by a second terminal, first reference signals from a first terminal on M beams corresponding to M resources, wherein the first reference signal is a demodulation reference signal of a physical sidelink shared channel PSSCH or a physical sidelink control channel PSCCH, the PSCCH is used to carry sidelink control information, the sidelink control information is used to reserve N beam feedback resources, the N beam feedback resources are used to feed back beam measurement results of the M beams, the N beam feedback resources do not overlap in time domain, and both M and N are positive integers;

measuring, by the second terminal, the M first reference signals to obtain M pieces of beam feedback information; and

sending, by the second terminal, at least one of the M pieces of beam feedback information to the first terminal on at least one of the N beam feedback resources.

14. The method according to claim 13, wherein the sidelink control information further comprises second indication information, the second indication information indicates a time window, and the method further comprises:

sending, by the second terminal, direct communication receive information to the first terminal in the time window in a direction of a second beam, wherein

the second beam is a beam corresponding to a largest beam measurement result in beam measurement results corresponding to a plurality of beams; or

the second beam is any beam in a candidate beam set, and a beam measurement result corresponding to a candidate beam in the candidate beam set is greater than or equal to a specified threshold.

15. The method according to any one of claims 11 to 14, wherein the PSSCH is used to carry a direct communication request message.

16. The method according to any one of claims 11 to 15, wherein the sidelink control information further comprises first indication information, and the first indication information indicates that the PSSCH carries the direct communication request message.

17. The method according to any one of claims 11 to 16, wherein the sidelink control information further comprises third indication information, and the third indication information indicates time domain positions of the N beam feedback resources.

18. The method according to claim 17, wherein the time domain position of the beam feedback resource comprises an absolute symbol position or a slot position, or the time domain position of the beam feedback resource comprises a slot position and a relative symbol position in a slot.

19. The method according to any one of claims 11 to 18, wherein at least two slots in which the N beam feedback resources are located are consecutive in time domain.

20. The method according to any one of claims 11 to 19, wherein a difference between a slot in which a first beam feedback resource in the N beam feedback resources is located and a slot in which an $N^{th}$ beam feedback resource in the N beam feedback resources is located is within a first threshold range.

21. The method according to any one of claims 11 to 20, wherein the N beam feedback resources correspond to $\lceil M/X \rceil$ slots, $\lceil \ \rceil$ represents rounding up, and X beam feedback resources corresponding to the X beam directions are located in a same slot.

22. The method according to claim 21, wherein $N = \lceil M/X \rceil$.

23. The method according to any one of claims 11 to 20, wherein M is equal to N.

24. A beam training apparatus, comprising a module configured to perform the method according to any one of claims 1 to 4 and 8 to 10, or comprising a module configured to perform the method according to any one of claims 5 to 10, or comprising a module configured to perform the method according to any one of claims 11, 12, and 15 to 23, or comprising a module configured to perform the method according to any one of claims 13 to 23.

25. A beam training apparatus, comprising a processor and a storage medium, wherein the storage medium stores instructions, and when the instructions are run by the processor, the method according to any one of claims 1 to 4 and 8 to 10 is implemented, or the method according to any one of claims 5 to 10 is implemented, or the method according to any one of claims 11, 12, and 15 to 23 is implemented, or the method according to any one of claims 13 to 23 is implemented.

26. A communication system, comprising a first beam training apparatus and a second beam training apparatus, wherein the first beam training apparatus comprises a module configured to perform the method according to any one of claims 1 to 4 and 8 to 10, and the second beam training apparatus comprises a module configured to perform the method according to any one of claims 5 to 10.

27. A communication system, comprising a third beam training apparatus and a fourth beam training apparatus, wherein the first beam training apparatus comprises a module configured to perform the method according to any one of claims 11, 12, and 15 to 23, and the second beam training apparatus comprises a module configured to perform the method according to any one of claims 13 to 23.

28. A computer-readable storage medium, wherein the computer-readable storage medium comprises instructions, and when the instructions are run by a processor, the method according to any one of claims 1 to 4 and 8 to 10 is implemented, or the method according to any one of claims 5 to 10 is implemented, or the method according to any one of claims 11, 12, and 15 to 23 is implemented, or the method according to any one of claims 13 to 23 is implemented.

FIG. 1

EP 4 668 601 A1

V2V

V2P

V2I/V2N

FIG. 2

FIG. 3

FIG. 4

EP 4 668 601 A1

Bitmap: 11001110

■ Subframe used for SL

□ Normal subframe

Sequence number of
a start resource block

Subchannel 1 — $n_{CH}$

Subchannel 2 — $n_{CH}$

...

Subchannel $N$ — $n_{CH}$

Spectrum

FIG. 5

| 0 | 1 | 2 | 3 | 4 | 5 | 6 | 7 | 8 | 9 | 10 | 11 | 12 | 13 |

▨ PSFCH

□ PSSCH

■ GAP

A PSFCH period is 1

A PSFCH period is 2

Resource pool

A PSFCH period is 4

One SL transmission slot

FIG. 6

| PRB | 0 | 1 | 2 | ... | 11 | 12 | 13 | Bitmap |
|---|---|---|---|---|---|---|---|---|
| 0 | | | | | | | | 1 |
| 1 | | | | | | | | 1 |
| 2 | | | | | | | | 1 |
| 3 | | | | | | | | 1 |
| 4 | | | | | | | | 0 |
| 5 | | | | | | | | 0 |
| 6 | | | | | | | | 0 |
| 7 | | | | | | | | 0 |
| 8 | | | | | | | | 0 |
| 9 | | | | | | | | 0 |
| 10 | | | | | | | | 1 |
| 11 | | | | | | | | 1 |
| 12 | | | | | | | | 0 |
| 13 | | | | | | | | 0 |
| 14 | | | | | | | | 0 |
| 15 | | | | | | | | 0 |
| 16 | | | | | | | | 0 |
| 17 | | | | | | | | 0 |
| 18 | | | | | | | | 0 |
| 19 | | | | | | | | 0 |
| 20 | | | | | | | | 0 |
| 21 | | | | | | | | 0 |
| 22 | | | | | | | | 0 |
| 23 | | | | | | | | 1 |
| 24 | | | | | | | | 1 |
| 25 | | | | | | | | 0 |
| 26 | | | | | | | | 0 |
| 27 | | | | | | | | 0 |
| 28 | | | | | | | | 0 |
| 29 | | | | | | | | 0 |

PSFCH resource

FIG. 7

FIG. 8

FIG. 9

UE 1                                                                    UE 2

S1001: Direct communication request message

S1002: Direct security mode command

S1003: Direct security mode complete message

S1004: Direct communication accept message

S1005: PC5-radio resource control signal and
uplink data transmission

FIG. 10

UE-A                                                                    UE-B

FIG. 11

FIG. 12

FIG. 13

FIG. 14

A PSSCH and a PSCCH are sent and
received in a same coarse beam direction

PSFCH

SCI 1

SCI 2

...

Bitmap

0
0
...
0
1
1
1

Cyclic shift code

RB

FIG. 15

| First terminal | | Second terminal |
|---|---|---|

S1601: The first terminal sends first reference signals to the second terminal on M beams corresponding to M resources (where SCI is used to reserve N beam feedback resources)

S1602: The second terminal measures the M first reference signals to obtain M pieces of beam feedback information

S1603: The second terminal sends at least one of the M pieces of beam feedback information to the first terminal on at least one of the N beam feedback resources

FIG. 16

Reserve N beam feedback resources

SCI

...    ...    ...

FIG. 17

Reserve a beam feedback resource

SCI  SCI

...          ...                                      ...

Sending and
receiving in a same
coarse beam direction

Case 1

AGC PSFCH GAP          AGC PSFCH GAP

System feedback
resource

Case 2

AGC PSFCH GAP          No system
                       feedback resource

...

...          RB

...

Cyclic shift code

FIG. 18

FIG. 19

RE on a PSCCH/PSSCH

SL CSI-RS RE

FIG. 20

RE on a PSCCH/PSSCH

SL CSI-RS RE

FIG. 21

First
terminal

Second
terminal

S2201: The first terminal sends second information to the
second terminal in a first time unit by using a third beam

S2202: The second terminal determines, based on
the second information, a receive beam direction for
receiving, in a second time unit, information sent by
the first terminal

S2203: The first terminal sends third information to
the second terminal in the second time unit by using a
fourth beam

FIG. 22

2300

Beam training apparatus

Processing unit

2310

Communication
unit

2320

FIG. 23

2400

Beam training apparatus

2410 — Processor

Interface circuit ⎯ 2420

2430

Memory

FIG. 24

## INTERNATIONAL SEARCH REPORT

| International application No. |
| --- |
| **PCT/CN2024/074638** |

| A. | CLASSIFICATION OF SUBJECT MATTER |
| --- | --- |
| | H04B7/06(2006.01)i |

According to International Patent Classification (IPC) or to both national classification and IPC

| B. | FIELDS SEARCHED |
| --- | --- |

Minimum documentation searched (classification system followed by classification symbols)

IPC: H04B, H04W

Documentation searched other than minimum documentation to the extent that such documents are included in the fields searched

Electronic data base consulted during the international search (name of data base and, where practicable, search terms used)

CNTXT, DWPI, ENTXTC, CNKI, 3GPP: 波束, 测量, 参考信号, 解调参考信号, 侧行链路, 旁链路, 直连链路, 反馈, 报告, beam?, measur+, report+, feedback, DMRS, RS, sidelink, PSCCH, PSFCH, PSSCH

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114424466 A (CONVIDA WIRELESS LLC) 29 April 2022 (2022-04-29) description, paragraphs 65-148 and 279-295 | 11-28 |
| Y | CN 114424466 A (CONVIDA WIRELESS LLC) 29 April 2022 (2022-04-29) description, paragraphs 65-148 and 279-295 | 1-10, 24-26, 28 |
| Y | CN 115428355 A (QUALCOMM INC.) 02 December 2022 (2022-12-02) description, paragraphs 125-182 | 1-10, 24-26, 28 |
| Y | US 2022046430 A1 (QUALCOMM INC.) 10 February 2022 (2022-02-10) description, paragraphs 53-232 | 1-10, 24-26, 28 |
| Y | US 2022399917 A1 (SAMSUNG ELECTRONICS CO., LTD.) 15 December 2022 (2022-12-15) description, paragraphs 159-250 | 1-10, 24-26, 28 |
| A | WO 2022018688 A1 (LENOVO SINGAPORE PTE. LTD.) 27 January 2022 (2022-01-27) entire document | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 March 2024** | **29 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | | | International application No.<br>**PCT/CN2024/074638** | | | |
|---|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| CN | 114424466 | A | 29 April 2022 | EP | 4008064 | A1 | 08 June 2022 |
|  |  |  |  | US | 2022286184 | A1 | 08 September 2022 |
|  |  |  |  | WO | 2021034572 | A1 | 25 February 2021 |
| CN | 115428355 | A | 02 December 2022 | US | 2021352625 | A1 | 11 November 2021 |
|  |  |  |  | US | 11582722 | B2 | 14 February 2023 |
|  |  |  |  | WO | 2021225748 | A1 | 11 November 2021 |
|  |  |  |  | EP | 4147372 | A1 | 15 March 2023 |
| US | 2022046430 | A1 | 10 February 2022 | US | 11902801 | B2 | 13 February 2024 |
| US | 2022399917 | A1 | 15 December 2022 | KR | 20210063170 | A | 01 June 2021 |
|  |  |  |  | EP | 4050810 | A1 | 31 August 2022 |
|  |  |  |  | EP | 4050810 | A4 | 30 November 2022 |
|  |  |  |  | WO | 2021101196 | A1 | 27 May 2021 |
| WO | 2022018688 | A1 | 27 January 2022 | EP | 4186174 | A1 | 31 May 2023 |
|  |  |  |  | US | 2023361955 | A1 | 09 November 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310175990